(19) **Europäisches Patentamt**
**European Patent Office**
**Office européen des brevets**

(11) **EP 4 769 965 A1**

(12) **EUROPEAN PATENT APPLICATION**
published in accordance with Art. 153(4) EPC

(43) Date of publication:
**01.07.2026 Bulletin 2026/27**

(21) Application number: **24855579.9**

(22) Date of filing: **31.07.2024**

(51) International Patent Classification (IPC):
***H04B 7/0426*** (2017.01)

(52) Cooperative Patent Classification (CPC):
**H04B 7/0426; H04B 7/0456; H04W 24/08**

(86) International application number:
**PCT/CN2024/108670**

(87) International publication number:
**WO 2025/039853 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.08.2023 CN 202311078237**

(71) Applicant: **Datang Mobile Communications
Equipment Co., Ltd.
Beijing 100085 (CN)**

(72) Inventors:
- **ZHANG, Xin**
  **Beijing 100085 (CN)**
- **SONG, Lei**
  **Beijing 100085 (CN)**
- **SU, Xin**
  **Beijing 100085 (CN)**

(74) Representative: **Ipsilon
12 Avenue d'Italie
75013 Paris (FR)**

(54) **BEAMFORMING METHOD AND APPARATUS, AND STORAGE MEDIUM**

(57) Embodiments of the present disclosure provide a beamforming method and apparatus, and a storage medium. The method comprises: measuring first measurement signals and second measurement signals, and determining measurement results; on the basis of the measurement results, determining serving transmitting/receiving points, coding matrix coefficients of the serving transmitting/receiving points, and/or beamforming coefficients of a network device; and transmitting the coding matrix coefficients of the serving transmitting/receiving points and/or the beamforming coefficients of the network device to the network device, wherein the first measurement signals comprise measurement signals transmitted from the network device by means of transmitting/receiving points, and the second measurement signals are measurement signals transmitted from the transmitting/receiving points. According to the present disclosure, the second measurement signals transmitted to a terminal by the transmitting/receiving points are increased, so that the terminal may distinguish the measurement signals, and the terminal may voluntarily select the serving transmitting/receiving points on the basis of the measurement results and report related information of cooperative beamforming to a network side, thereby improving the beamforming performance of a system,

and reducing the measurement overhead.

FIG. 2

**Description**

CROSS-REFERENCES TO RELATED APPLICATIONS

The present application claims priority to Chinese Patent Application No. 202311078237.7, filed on August 24, 2023, entitled "Beamforming Method and Apparatus, and Storage Medium", which is hereby incorporated by reference in its entirety.

FIELD

The present application relates to the field of communication technology, and in particular to a beamforming method, an apparatus and a storage medium.

BACKGROUND

Coordinated Multi-Point is a crucial method for improving cell edge coverage and enhancing user experience rate. As the number of Transmitting Receiving Points (TRPs, which is also referred to as Transmission/Reception Points)/TRP groups increases, pilot overhead and reporting overhead also multiply.

In a distributed antenna network based on a Reconfigurable Intelligent Surface (RIS), a signal transmitted from a network side may directly reach a terminal such as User Equipment (UE), i.e., a single-hop link, or may be reflected/-transmitted to the UE through the RIS, i.e., a dual-hop link.

From the UE's perspective, it is impossible to distinguish whether the signal arrives through a single-hop link or a dual-hop link, nor may it distinguish signals forwarded from different RIS TRPs. In this case, channel information used for beamforming is information on an equivalent channel from the network side to the UE. This results in the coordinated beamforming scheme for the UE determined by the network side based on the information reported by the UE being suboptimal. To improve the coordinated beamforming performance in this case, additional measurements are required, causing an increase in measurement overhead as the number of candidate transmitting receiving points and beams rises.

BRIEF SUMMARY

For addressing the aforementioned problems existing in related art, according to embodiments of the present application, there is provided a beamforming method, an apparatus, and a storage medium.

According to an embodiment of the present application, there is provided a beamforming method performed by a terminal, including:

measuring a first measurement signal and a second measurement signal to determine a measurement result;

determining a serving transmitting receiving point, and a coding matrix coefficient for the serving transmitting receiving point and/or a beamforming coefficient for a network device based on the measurement result; and

transmitting the coding matrix coefficient for the serving transmitting receiving point and/or the beamforming coefficient for the network device to the network device,

where the first measurement signal includes a measurement signal transmitted from the network device through a transmitting receiving point, and the second measurement signal is a measurement signal transmitted from the transmitting receiving point.

In some embodiments, determining the measurement result includes:

measuring the first measurement signal to determine a first measurement result, where the first measurement result includes channel information from the network device to the terminal through the transmitting receiving point; and

measuring the second measurement signal to determine a second measurement result, where the second measurement result includes channel information from the transmitting receiving point to the terminal.

In some embodiments, determining the serving transmitting receiving point, and the coding matrix coefficient for the serving transmitting receiving point and/or the beamforming coefficient for the network device based on the measurement result includes:

determining the serving transmitting receiving point, and the coding matrix coefficient for the serving transmitting receiving point and/or the beamforming coefficient for the network device, based on a predefined rule or an instruction from the network device and the measurement result.

In some embodiments, the coding matrix coefficient for the serving transmitting receiving point and/or the beamforming coefficient for the network device are determined based on the following formula:

$$\xi_i = tr(g_i^H g_i)/tr(g_n^H g_n)$$

$$\lambda_i = tr(h_i^H h_i)/tr(h_n^H h_n)$$

where $\xi_i$ is the coding matrix coefficient for an $i$-th serving transmitting receiving point, $\lambda_i$ is the beamforming coefficient for the network device corresponding to the $i$-th serving transmitting receiving point, $g_i$ is channel information from the $i$-th serving transmitting receiving point to the terminal, $h_i$ is channel information from the network device to the terminal through the $i$-th serving transmitting receiving point, and $(h_n, g_n)$ is channel information corresponding to a $n$-th serving transmitting receiving point, where the $n$-th serving transmitting receiving point is a transmitting receiving point with an optimal channel quality among the serving transmitting receiving points determined by the terminal, and $i$ and $n$ are integers greater than or equal to 1.

In some embodiments, the method further includes:

receiving first configuration information transmitted from the network device, where the first configuration information includes at least one of: information for indicating the first measurement signal, information for indicating a time point at which the terminal receives the first measurement signal, information for indicating the second measurement signal, or information for indicating a time point at which the terminal receives the second measurement signal; and
receiving the first measurement signal and/or the second measurement signal, based on the first configuration information.

According to an embodiment of the present application, there is provided a beamforming method performed by a network device, including:

receiving a coding matrix coefficient for a serving transmitting receiving point and/or a beamforming coefficient for the network device transmitted from a terminal; and
determining a coding matrix corresponding to the serving transmitting receiving point of the terminal and/or beamforming corresponding to the network device, based on the coding matrix coefficient and/or the beamforming coefficient.

In some embodiments, the method further includes:

transmitting a first measurement signal to the terminal or a transmitting receiving point,

where the transmitting receiving point is configured to forward the first measurement signal to the terminal, and the first measurement signal is used to determine a first measurement result, where the first measurement signal includes channel information from the network device to the terminal through the transmitting receiving point, and the first measurement result is used to determine the serving transmitting receiving point, and the coding matrix coefficient for the serving transmitting receiving point and/or the beamforming coefficient for the network device.

In some embodiments, the method further includes:

transmitting configuration information to the terminal or the transmitting receiving point, where the configuration information includes first configuration information transmitted to the terminal, or second configuration information transmitted to the transmitting receiving point,

where the first configuration information includes at least one of: information for indicating the first measurement signal, information for indicating a time point at which the terminal receives the first measurement signal, information for indicating the second measurement signal, or information for indicating a time point at which the terminal receives the second measurement signal,

the second configuration information includes at least one of: information for indicating the coding matrix for the transmitting receiving point, or information for indicating a time point at which the transmitting receiving point transmits the second measurement signal, and

the second measurement signal is a measurement signal transmitted from the transmitting receiving point to the terminal.

In some embodiments, the coding matrix corresponding to the serving transmitting receiving point and/or the beamforming corresponding to the network device are determined based on the following formula:

$$F_i = \xi_i F_{i,0}$$

$$B = \sum_{i=1}^{N} \lambda_i B_i$$

where $F_i$ is the coding matrix corresponding to an $i$-th serving transmitting receiving point, $\xi i$ is the coding matrix coefficient corresponding to the $i$-th serving transmitting receiving point, $F_{i,0}$ is a beam used by the $i$-th serving transmitting receiving point during the measurement process, B is the beamforming corresponding to the network device, N is the number of the serving transmitting receiving points determined by the terminal, $\lambda_i$ is the beamforming coefficient for the network device corresponding to the $i$-th serving transmitting receiving point, $B_i$ is the beam for the network device corresponding to the $i$-th serving transmitting receiving point, and $i$ and N are integers greater than or equal to 1.

According to an embodiment of the present application, there is provided a beamforming method performed by a transmitting receiving point, including:

transmitting a second measurement signal to a terminal,

where the second measurement signal is used to determine a serving transmitting receiving point of the terminal, and a coding matrix coefficient corresponding to the serving transmitting receiving point.

In some embodiments, the method further includes:

receiving second configuration information transmitted from a network device; and

determining a coding matrix and/or a time point at which the second measurement signal is transmitted to the terminal based on the second configuration information.

In some embodiments, transmitting the second measurement signal to the terminal includes:

receiving a first measurement signal transmitted from a network device; and

switching a coding matrix, forwarding the first measurement signal to the terminal, and transmitting the second measurement signal to the terminal, based on a predefined rule or an instruction from the network device.

In some embodiments, transmitting the second measurement signal to the terminal includes:
transmitting the second measurement signal to the terminal from a control node of the transmitting receiving point.
According to an embodiment of the present application, there is provided a terminal including a memory, a transceiver, and a processor, where the memory is configured to store a computer program, the transceiver is configured to transmit and receive data under control of the processor, and the processor is configured to read the computer program from the memory and perform the beamforming method as described above.
According to an embodiment of the present application, there is provided a network device including a memory, a transceiver, and a processor, where the memory is configured to store a computer program, the transceiver is configured to transmit and receive data under control of the processor, and the processor is configured to read the computer program from the memory and perform the beamforming method as described above.
According to an embodiment of the present application, there is provided a transmitting receiving point including a memory, a transceiver, and a processor, where the memory is configured to store a computer program, the transceiver is configured to transmit and receive data under control of the processor, and the processor is configured to read the computer program from the memory and perform the beamforming method as described above.

According to an embodiment of the present application, there is provided a beamforming apparatus including:

a measurement unit, configured to measure a first measurement signal and a second measurement signal to determine a measurement result;

a determination unit, configured to determine a serving transmitting receiving point, and a coding matrix coefficient for the serving transmitting receiving point and/or a beamforming coefficient for a network device based on the measurement result; and

a transmitting unit, configured to transmit the coding matrix coefficient for the serving transmitting receiving point and/or the beamforming coefficient for the network device to the network device,

where the first measurement signal includes a measurement signal transmitted from the network device through a transmitting receiving point, and the second measurement signal is a measurement signal transmitted from the transmitting receiving point.

According to an embodiment of the present application, there is provided a beamforming apparatus including:

a receiving unit, configured to receive a coding matrix coefficient for a serving transmitting receiving point and/or a beamforming coefficient for a network device transmitted from a terminal; and

a determination unit, configured to determine a coding matrix corresponding to the serving transmitting receiving point of the terminal and/or beamforming corresponding to the network device, based on the coding matrix coefficient and/or the beamforming coefficient.

According to an embodiment of the present application, there is provided a beamforming apparatus including:

a transmitting unit, configured to transmit a second measurement signal to a terminal,

where the second measurement signal is used to determine a serving transmitting receiving points of the terminal, and a coding matrix coefficient corresponding to the serving transmitting receiving point.

According to an embodiment of the present application, there is provided a processor-readable storage medium storing a computer program which is configured to cause the processor to perform the beamforming method as described above.

According to an embodiment of the present application, there is provided a non-transient readable storage medium storing a computer program which is configured to cause a computer to perform the beamforming method as described above.

According to an embodiment of the present application, there is provided a chip product storing a computer program which is configured to cause the chip product to perform the beamforming method as described above.

According to an embodiment of the present application, there is provided a beamforming method, an apparatus, and a storage medium. The terminal measures a first measurement signal transmitted from a network device through a transmitting receiving point and a second measurement signal transmitted from the transmitting receiving point, selects a serving transmitting receiving point based on a measurement result, and determines and reports a coding matrix coefficient for the serving transmitting receiving point and/or a beamforming coefficient for the network device to the network device. By adding the second measurement signal transmitted to the terminal from the transmitting receiving point, the terminal may distinguish whether the measurement signal is transmitted directly from the network device or forwarded through the transmitting receiving point. Measurement signals forwarded from different transmitting receiving points may also be distinguished. Therefore, the terminal may select a serving transmitting receiving point based on the measurement result by itself and report information on coordinated beamforming to a network side, thereby improving beamforming performance of a system and reducing measurement overhead.

BRIEF DESCRIPTION OF THE DRAWINGS

In order to clearly illustrate the technical solutions in the embodiments of the present application or the prior art, the drawings used in the description of the embodiments or the prior art are briefly introduced below. Obviously, the drawings in the following description are only some embodiments of the present application. For those skilled in the art, other drawings may be obtained based on these drawings without any creative effort.

FIG. 1 is a schematic diagram of an architecture of a RIS-based distributed MIMO system according to the related art;

FIG. 2 is a first schematic flowchart illustrating a beamforming method according to an embodiment of the present application;

FIG. 3 is a schematic link diagram of a single RIS TRP according to an embodiment of the present application;

FIG. 4 is a second schematic flowchart illustrating a beamforming method according to an embodiment of the present application;

FIG. 5 is a third schematic flowchart illustrating a beamforming method according to an embodiment of the present application;

FIG. 6 is a schematic structural diagram of a terminal according to an embodiment of the present application;

FIG. 7 is a schematic structural diagram of a network device according to an embodiment of the present application;

FIG. 8 is a schematic structural diagram of a transmitting receiving point according to an embodiment of the present application;

FIG. 9 is a first schematic structural diagram illustrating a beamforming apparatus according to an embodiment of the present application;

FIG. 10 is a second schematic structural diagram illustrating a beamforming apparatus according to an embodiment of the present application; and

FIG. 11 is a third schematic structural diagram illustrating a beamforming apparatus according to an embodiment of the present application.

## DETAILED DESCRIPTION

Coordinated Multi-Point is an important technical means to improve coverage at the cell edge. From a network architecture perspective, network deployment with a large number of distributed access points and centralized baseband processing is more conducive to providing a balanced user experience rate, and significantly reduces the latency and signaling overhead caused by handover. As a frequency band increases, a relatively dense deployment of access points is also required to ensure network coverage.

In a high-frequency band, as the integration level of antenna apparatus increases, modular antenna arrays will be more inclined to be used. The antenna array of each TRP can be divided into several relatively independent antenna sub-arrays (or panels), so the shape and number of ports of the entire array may be flexibly adjusted according to deployment scenarios and business requirements.

In a millimeter wave band, as the wavelength decreases, the blocking effect caused by an obstacle such as a human body or vehicle becomes more significant. In this case, from a perspective of ensuring the robustness of the link connection, coordination among multiple transmitting receiving points or panels can be used to transmit/receive multiple beams at multiple angles, thereby reducing the adverse effect of the blocking effect.

In a traditional distributed array, panels or TRPs are connected through wired connections such as fiber optic cables or coaxial cables. Limited by the deployment environment and cable length, the deployment flexibility is restricted and the deployment cost is high. Using low-cost, quasi-passive RIS as a distributed panel or TRP in a distributed Multi-Input Multi-Output (MIMO) system allows for more flexible distributed deployment.

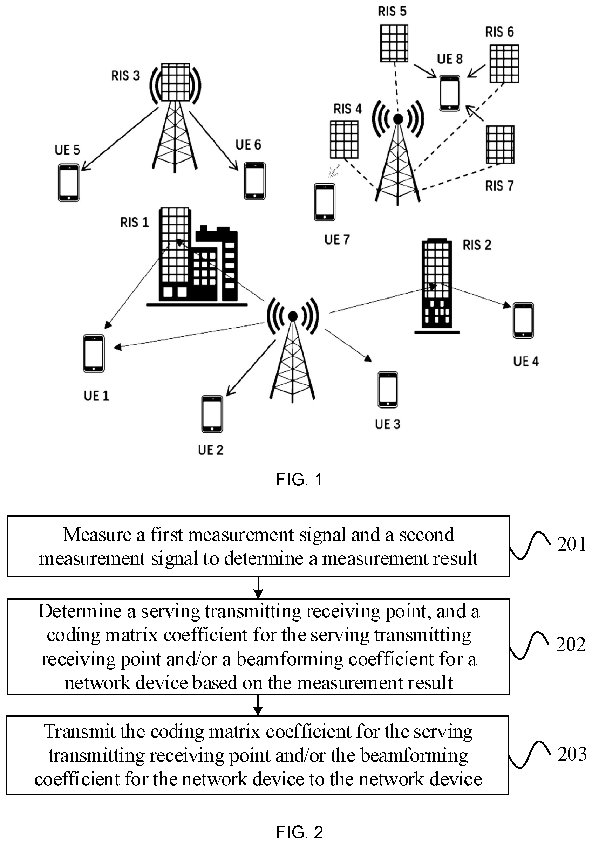

FIG. 1 is a schematic diagram of an architecture of a RIS-based distributed MIMO system according to the related art. As shown in FIG. 1, the RIS-based distributed MIMO system consists of a traditional base station and multiple RIS TRPs. In general, the locations of the base station and the RIS are fixed once being deployed. The base station and the RIS may be deployed in a same location or in different locations. The measurement signal transmitted from the base station is either directly transmitted to the UE through a single-hop link, or forwarded by the RIS before reaching the UE through a dual-hop link.

According to the mapping relationship of transmitted signal streams to multiple TRPs/panels, coordinated multi-point transmission technology may be generally divided into two categories of coherent and non-coherent transmission.

In coherent transmission, each data layer is mapped onto multiple TRPs/panels participating in the coordination through a weighted vector. If the large-scale channel parameters of each TRP/panel are the same and the same frequency source is used, coherent transmission is equivalent to splicing multiple sub-arrays into a higher-dimensional virtual array, thereby achieving higher shaping/precoding/multiplexing gain. However, in actual deployment scenarios, this approach imposes a higher requirement on the synchronization between transmitting receiving points and the transmission capabilities of the backhaul link, and is quite sensitive to various non-ideal factors.

In comparison, Non-Coherent Joint Transmission (NC-JT) is less affected by the non-ideal factors. The Non-Coherent Joint Transmission refers to that each data stream is only mapped to the port corresponding to the TRP/panel with consistent large-scale channel parameters (i.e., quasi-colocation (QCL)). Different data streams may be mapped to different ports of the QCL without having to unify all the coordinated points into a single virtual array and perform joint shaping on each layer.

For a RIS-based distributed MIMO system, since multiple panels or TRPs are connected to the baseband through an air interface, there is no need to consider the transmission capacity of the backhaul link. However, issues such as timing and frequency deviation still need to be considered.

In a traditional distributed MIMO system, coordinated transmission is performed through multiple panels or TRPs remotely connected by radio frequency. Signals are transmitted from the baseband to a transmitting antenna through radio frequency cable and then emitted. The UE can obtain channel information between the transmitting antenna and the UE by measuring a reference signal. Different reference signals can be used for measurement through TRPs. The UE distinguish different TRPs using different reference signals, thereby obtaining channel information among different TRPs. The network side calculates the beamforming matrix for each TRP using the obtained channel information.

In a RIS-based distributed antenna network, signals transmitted from the base station either may reach the UE through RIS reflection/transmission, or may be transmitted directly to the UE. In this case, the channel information used for beamforming is information on an equivalent channel from the base station to the UE, and it is impossible to distinguish multiple RISs in the channel. From the UE's perspective, on one hand, the UE cannot distinguish a direct link from a reflected link, and on another hand, the UE cannot distinguish signals forwarded by different RIS TRPs.

Meanwhile, the network side selects an appropriate coordinated transmitting receiving point and a transmission scheme according to the user's current channel condition. The user's channel condition is determined according to the information measured and reported by the user and/or the prior information of the system.

In this case, on one hand, the coordinated transmitting receiving point or coordinated transmission beamforming determined by the network side according to the information reported by the UE are not an optimal solution. On another hand, in order to improve system performance, additional measurements are required, causing an increase in measurement overhead as the number of candidate TRPs and beams rises.

To address the aforementioned problems existing in the related art, according to embodiments of the present application, there is provided a beamforming method, an apparatus, and a storage medium.

In the embodiments of the present application, the term "and/or" describes a related relationship of associated objects, and indicates that there may be three kinds of relationships. For example, A and/or B may represent that A exists alone, A and B exist simultaneously, and B exists alone. The character "/" generally indicates that the preceding and following associated objects have an "or" relationship.

In the embodiments of the present application, the term "multiple" refers to two or more than two, and other quantifiers are similar thereto.

The technical solutions provided by the embodiments of the present application may be applied to a variety of systems, particularly to 5G systems, 5G Advanced systems, 6G systems, and evolved systems thereof. For example, the applicable system may include a Global System of Mobile Communication (GSM) system, a Code Division Multiple Access (CDMA) system, Wideband Code Division Multiple Access (WCDMA) General Packet Radio Service (GPRS) system, a Long Term Evolution (LTE) system, a LTE Frequency Division Duplex (FDD) system, a LTE Time Division Duplex (TDD) system, a Long Term Evolution Advanced (LTE-A) system, a Universal Mobile Telecommunication System (UMTS), a Worldwide Interoperability for Microwave Access (WiMAX) system, and a 5G New Radio (NR) system. All of these systems include terminal devices and network devices. The system may further include core network parts, such as an Evolved Packet System (EPS), a 5G System (5GS), and the like.

The terminal device involved in the embodiment of the present application may be a device that provides voice and/or data connectivity to a user, a handheld device with a wireless connection function, or other processing devices connected to a wireless modem. The name of the terminal device may vary in different systems. For example, in a 5G system, the terminal device may be referred to as a User Equipment (UE). A wireless terminal device may communicate with one or more Core Networks (CNs) via a Radio Access Network (RAN), and the wireless terminal device may be a mobile terminal device, such as a mobile phone (also known as a "cellular" telephone) and a computer with a mobile terminal device. For example, it may be a portable, pocket-sized, handheld, computer-built-in or vehicle-mounted mobile devices, which exchange language and /or data with the radio access network. For example, it may be a Personal Communication Service (PCS) telephone, a cordless telephone, a Session Initiated Protocol (SIP) telephone, a Wireless Local Loop (WLL) station, a Personal Digital Assistant (PDA), and the like. The wireless terminal device may also be referred to as a system, a Subscriber Unit, a Subscriber Station, a Mobile Station, a Mobile, a Remote Station, an Access Point, a Remote Terminal, an Access Terminal, a User Terminal, a User Agent, or a User Device, which is not limited in the embodiment of the present application.

The network device involved in the embodiments of the present application may be a base station, which may include multiple cells providing services for the terminal device. Depending on the specific application scenario, the base station may also be referred to as an access point, or a device communicating with a wireless terminal device through one or more sectors on an air interface in the access network, or may be referred to as other names. The network device may be used to exchange received air frames with Internet Protocol (IP) packets, and act as a router between the wireless terminal device and the rest of the access network, where the rest of the access network may include an IP communication network. The network device may also coordinate attribute management for the air interface. For example, the network device in the embodiments of the present application may be a Base Transceiver Station (BTS) in a global system for mobile communications (GSM) or a code division multiple access (CDMA), a NodeB in a Wide-Band Code Division Multiple Access (WCDMA), an Evolutionary Node B (eNB or e-NodeB) in a Long Term Evolution (LTE) system, a 5G base station (gNB) in 5G network architecture (Next Generation System), a Home evolved NodeB (HeNB), a Relay Node, a Femto, a Pico, or the like, which is not limited thereto in the embodiments of the present application. In some network structures, the network device may include a Centralized Unit (CU) node and a Distributed Unit (DU) node, which may also be geographically separated.

The network device and the terminal device may each use one or more antennas for Multiple Input Multiple Output (MIMO) transmission. The MIMO transmission may be a Single-User MIMO (SU-MIMO) or a Multi-User MIMO (MU-MIMO). Depending on the configuration and number of antenna combinations, the MIMO transmission may be a 2D-MIMO, a 3D-MIMO, an FD-MIMO, or a massive-MIMO, and may also be diversity transmission, precoding transmission, or beamforming transmission, etc.

The technical solutions in the embodiments of the present application will be clearly and completely described below with reference to the drawings in the embodiments of the present application. Obviously, the described embodiments are only part of the embodiments of the present application, and not all of the embodiments. Based on the embodiments in the present application, all other embodiments obtained by those of ordinary skill in the art without inventive effort are within the scope of protection of the present application.

The beamforming method provided in an embodiment of the present application may be applied to any scenario as illustrated in FIG. 1, where the RIS may be replaced by other devices with signal forwarding functions.

FIG. 2 is a first schematic flowchart illustrating a beamforming method according to an embodiment of the present application. As shown in FIG. 2, the method is performed by a terminal, and the method includes at least the following steps.

At step 201, measure a first measurement signal and a second measurement signal to determine a measurement result.

At step 202, determine a serving transmitting receiving point, and a coding matrix coefficient for the serving transmitting receiving point and/or a beamforming coefficient for a network device based on the measurement result.

At step 203, transmit the coding matrix coefficient for the serving transmitting receiving point and/or the beamforming coefficient for the network device to the network device.

Herein, the first measurement signal includes a measurement signal transmitted from the network device through a transmitting receiving point, and the second measurement signal is the measurement signal transmitted from the transmitting receiving point.

In an embodiment, the terminal measures the first measurement signal transmitted from the network device through the transmitting receiving point and the second measurement signal transmitted from the transmitting receiving point to determine the measurement result, selects the serving transmitting receiving point, and the coding matrix coefficient for the serving transmitting receiving point and/or the beamforming coefficient for the network device based on the measurement result, and reports the coding matrix coefficient for the serving transmitting receiving point and/or the beamforming coefficient for the network device to the network device.

The first measurement signal transmitted from a network side to the terminal may arrive at the terminal through different paths. It may be forwarded to the terminal by the network device through a transmitting receiving point, the path of which corresponds to a dual-hop link. Alternatively, it may be directly transmitted to the terminal by the network device, the path of which corresponds to a single-hop link. Within a certain time window, due to a possible time delays among different paths, the terminal may receive the first measurement signal transmitted through the different paths at different time points, or may receive the first measurement signal transmitted from different directions at a same time point. When the terminal performs reception and detection processing, the first measurement signals transmitted through the different paths may be detected as the same signal after being received and pre-processed.

In the embodiments of the present application, the technical solution mainly focuses on dual-hop link, i.e., the scenario where the network device forwards the measurement signal to the terminal through the transmitting receiving point. For the first measurement signal transmitted to the terminal through a single-hop link, the measurement and reporting thereof may be completed by using related technologies.

In some embodiments, the transmitting receiving point may be a TRP of the network device, or devices with signal forwarding functions such as a RIS, a NCR, or a Relay, serving as a relay forwarding node for the first measurement signal transmitted from the network device. The NCR represents a Network Controlled Repeater, and the Relay represents a relay device.

In some embodiments, the second measurement signal is a RIS TRP measurement signal transmitted from the RIS node to the terminal. In some embodiments, the second measurement signal is a NCR TRP measurement signal transmitted from the NRC node to the terminal. In some embodiments, the second measurement signal is a measurement signal transmitted from other relay forwarding nodes.

In some embodiments of the present application, a scenario where the transmitting receiving point is the RIS TRP and the second measurement signal is the RIS TRP measurement signal is taken as an example for illustration. Utilizing the programmable control characteristics of RIS, the RIS node may forward a signal transmitted from the base station to the target terminal, and may also add the second measurement signal to the forwarded signal.

In some embodiments, the number of transmitting receiving points is at least two. When there is only one transmitting receiving point, the terminal and the network device do not need to select a serving transmitting receiving point, nor do they need to consider a coordinated beamforming among multiple TRPs (including RIS TRPs, etc.). Therefore, the present application mainly focuses on beamforming in a multi-TRP coordination scenario. In some embodiments, the network device itself may be regarded as a particular TRP to implement multi-TRP coordination.

The terminal can select the serving TRP by itself according to the measurements of the first and second measurement signals, which is different from the related art where the network side determines the serving transmitting receiving point of the terminal according to the information reported by the terminal. The selection of the serving transmitting receiving point is more consistent with the terminal's requirements.

The terminal can distinguish which of the received first measurement signals are transmitted through a single-hop link and which are transmitted through a dual-hop link, according to the received second measurement signal. Meanwhile, different transmitting receiving points can be distinguished according to the second measurement signal.

In some embodiments, while reporting the coding matrix coefficient for the serving transmitting receiving point and/or the beamforming coefficient for the network device, the terminal can also report the selected serving transmitting receiving point. The terminal is generally mobile, and the terminal's serving TRP may not be changed during a short-term or short-distance movement. In this case, the terminal may choose not to report the serving transmitting receiving point. If the serving transmitting receiving point of the terminal is changed over time, the selected serving transmitting receiving point need to be reported to the network device.

According to an embodiment of the present application, there is provided a beamforming method. The terminal measures a first measurement signal transmitted from a network device through a transmitting receiving point and a second measurement signal transmitted from the transmitting receiving point, selects a serving transmitting receiving point based on a measurement result, and determines and reports a coding matrix coefficient for the serving transmitting receiving point and/or a beamforming coefficient for the network device to the network device. By adding the second measurement signal transmitted to the terminal from the transmitting receiving point, the terminal may distinguish whether the measurement signal is transmitted directly from the network device or forwarded through the transmitting receiving point. Measurement signals forwarded from different transmitting receiving points may also be distinguished. Therefore, the terminal may select a serving transmitting receiving point based on the measurement result by itself and report information on coordinated beamforming to a network side, thereby improving beamforming performance of a system and reducing measurement overhead.

In some embodiments, determining the measurement result includes:

measuring the first measurement signal to determine a first measurement result, where the first measurement result includes channel information from the network device to the terminal through the transmitting receiving point; and

measuring the second measurement signal to determine a second measurement result, where the second measurement result includes channel information from the transmitting receiving point to the terminal.

In an embodiment, the terminal measures the first measurement signal to determine the first measurement result, where the first measurement result includes channel information from the network device to the terminal through the transmitting receiving point. For example, the first measurement result includes the channel information of a gNB-RIS-UE.

In some embodiments, the first measurement signal may also be the measurement signal directly from the network device to the terminal. In some embodiments, the first measurement result includes channel information directly from the network device to the terminal. For example, the first measurement result includes the channel information of a gNB-UE.

The terminal measures the second measurement signal to determine the second measurement result including channel information from the transmitting receiving point to the terminal. For example, the second measurement result includes the channel information of a RIS-UE.

According to an embodiment of the present application, there is provided a beamforming method. The terminal measures the first measurement signal and the second measurement signal to obtain and distinguish the channel information of the gNB-TRP-UE, the gNB-UE, and the RIS-UE. Therefore, the terminal can select the serving transmitting receiving point according to the measurement result by itself, and report the information on coordinated beamforming to the network side, thereby improving beamforming performance of a system and reducing measurement overhead.

In some embodiments, determining the serving transmitting receiving point, and the coding matrix coefficient for the serving transmitting receiving point and/or the beamforming coefficient for the network device based on the measurement result includes:

determining the serving transmitting receiving point, and the coding matrix coefficient for the serving transmitting receiving point and/or the beamforming coefficient for the network device, based on a predefined rule or an instruction from the network device and the measurement result.

In an embodiment, according to the measurement result of the first measurement signal and the second measurement signal, the terminal determines the serving transmitting receiving point, and the coding matrix coefficient for the serving transmitting receiving point and/or the beamforming coefficient for the network device, which may be determined based on a predefined rule or an instruction from the network device.

In some embodiments, the terminal determines the serving transmitting receiving point based on the measurement result. For example, all of the transmitting receiving points are selected as serving transmitting receiving points. For example, the optimal N transmitting receiving points are selected as serving transmitting receiving points, where the value of N is predefined by the protocol or instructed by the network device. The optimal N transmitting receiving points can be selected using the Reference Signal Receiving Power (RSRP), Reference Signal Receiving Quality (RSRQ), etc.

The predefined rule includes at least one of the following. In some embodiments, a one-to-one correspondence exists between the first measurement signal of the network device and the beam of the network device. In some embodiments, a one-to-one correspondence exists between the second measurement signal and the transmitting receiving point. For example, a one-to-one correspondence exists between the RIS TRP measurement signal and the RIS TRP. In some embodiments, a mapping relationship exists between the beam of the network device and the beam of the transmitting receiving point, which may form a pair of a network device beam and a transmitting receiving point beam.

The instruction from the network device includes at least one of the following. In some embodiments, the network side indicates the current first measurement signal of the terminal, or the base station precoding. In some embodiments, the network side indicates the measurement timing for the terminal to perform signal measurement.

Once the terminal selects a serving transmitting receiving point, it determines the coding matrix coefficient for the serving transmitting receiving point and/or the beamforming coefficient for the network device, and reports the result to the network device.

The beamforming method according to an embodiment of the present application does not limit the terminal to select a serving transmitting receiving point, nor does the beamforming method limit the calculation method for determining the coding matrix coefficient for the serving transmitting receiving point and/or the beamforming coefficient for the network device according to the measurement result. However, when the terminal can clearly identify the transmission link of the measurement signal, the terminal selects the serving transmitting receiving point by itself and reports the information on coordinated beamforming to the network side, thereby improving beamforming performance of a system and reducing measurement overhead. Both the selected serving transmitting receiving point and the final determined coordinated beamforming scheme are optimal for the terminal.

In some embodiments, the coding matrix coefficient for the serving transmitting receiving point and/or the beamforming coefficient for the network device are determined based on the following formula:

$$\xi_i = tr(g_i^H g_i)/tr(g_n^H g_n)$$

$$\lambda_i = tr(h_i^H h_i)/tr(h_n^H h_n)$$

where $\xi_i$ is the coding matrix coefficient for an $i$-th serving transmitting receiving point, $\lambda_i$ is the beamforming coefficient for the network device corresponding to the $i$-th serving transmitting receiving point, $g_i$ is channel information from the $i$-th serving transmitting receiving point to the terminal, $h_i$ is channel information from the network device to the terminal through the $i$-th serving transmitting receiving point, and $(h_n, g_n)$ is channel information corresponding to a $n$-th serving transmitting receiving point, where the $n$-th serving transmitting receiving point is a transmitting receiving point with an optimal channel quality among the serving transmitting receiving points determined by the terminal. $i$ and $n$ are integers greater than or equal to 1, with the maximum value of $i$ being N, i.e., the terminal selecting N transmitting receiving points as the serving transmitting receiving points.

In some embodiments, the coding matrix coefficient for the serving transmitting receiving point and/or the beamforming coefficient for the network device are determined based on the following formula:

$$\xi_i = Ntr(g_i^H g_i)/\sum_{j=1}^{N} tr\left(g_j^H g_j\right)$$

$$\lambda_i = Ntr(h_i^H h_i)/\sum_{j=1}^{N} tr\left(h_j^H h_j\right)$$

where $\xi_i$ is the coding matrix coefficient for an $i$-th serving transmitting receiving point, $\lambda_i$ is the beamforming coefficient for the network device corresponding to the $i$-th serving transmitting receiving point, N is the number of serving transmitting receiving points determined by the terminal, $g_i$ is channel information from the $i$-th serving transmitting receiving point to the terminal, $h_i$ is channel information from the network device to the terminal through the $i$-th serving transmitting receiving point, $g_j$ is channel information from a $j$-th serving transmitting receiving point to the terminal, $h_j$ is the channel information from the network device to the terminal through the $j$-th serving transmitting receiving point, and $i$, $j$, and N are integers greater than or equal to 1.

In some embodiments, the coding matrix coefficient for the serving transmitting receiving points and/or the beamforming coefficient for the network device are determined based on the following formula:

$$\xi_i = tr(g_i^H g_i)/\sum_{j=1}^{N} \left(tr\left(g_j^H g_j\right) + \alpha I\right)$$

$$\lambda_i = tr(h_i^H h_i)/\sum_{j=1}^{N} \left(tr\left(h_j^H h_j\right) + \alpha I\right)$$

where $\xi_i$ is the coding matrix coefficient for an $i$-th serving transmitting receiving point, $\lambda_i$ is the beamforming coefficient for the network device corresponding to the $i$-th serving transmitting receiving point, N is the number of serving transmitting receiving points determined by the terminal, $g_i$ is channel information from the $i$-th serving transmitting receiving point to the terminal, $h_i$ is channel information from the network device to the terminal through the $i$-th serving transmitting receiving point, $g_j$ is channel information from a $j$-th serving transmitting receiving point to the terminal, $h_j$ is the channel information from the network device to the terminal through the $j$-th serving transmitting receiving point, and $i$, $j$, and N are integers greater than or equal to 1.

Herein, $\alpha$ is a regularization term used to balance maximizing the received power of the target UE and minimizing interference to other UEs. The smaller the value of $\alpha$, the less interference is made to other users. When $\alpha$ is infinitely large, it is equivalent to maximizing the received power of the target UE. $I$ is an identity matrix.

The foregoing illustrates three possible calculation methods for determining the coding matrix coefficients for the serving transmitting receiving points and/or beamforming coefficients for the network device. In an embodiment, selecting which of the three calculation methods, or other calculation methods, may be predefined by a protocol or instructed by the network device.

In some embodiments, the method further includes:

receiving first configuration information transmitted from the network device, where the first configuration information includes at least one of: information for indicating the first measurement signal, information for indicating a time point at which the terminal receives the first measurement signal, information for indicating the second measurement signal, or information for indicating a time point at which the terminal receives the second measurement signal; and

receiving the first measurement signal and/or the second measurement signal, based on the first configuration information.

In an embodiment, the terminal receives the first measurement signal, which may be configured by the network device. The configuration includes, but is not limited to, information indicating the first measurement signal and information indicating the time point at which the terminal receives the first measurement signal.

The terminal receives the second measurement signal, which may be configured by the network device. The configuration includes, but is not limited to, information indicating the second measurement signal and information indicating the time point at which the terminal receives the second measurement signal.

The terminal receives the first measurement signal at a specified time point, according to the information indicating the first measurement signal and the information indicating the time point at which the terminal receives the first measurement signal. The terminal receives the second measurement signal at a specified time point, according to the information indicating the second measurement signal and the information indicating the time point at which the terminal receives the second measurement signal.

A specific example is provided below to further illustrate the beamforming method according to the present application.

According to the instruction from the base station or the predefined rule, the UE measures the first measurement signal transmitted from the base station and the second measurement signal transmitted from at least two TRPs, selects the optimal n TRPs (including a RIS TRP or a TRP at base station side) as serving TRPs according to the measurement result, and calculates and reports the coding matrix coefficients for the n serving TRPs and/or the beamforming coefficient for the base station to the base station. In an embodiment, the UE may also report the selected n serving TRPs. The specific process is as follows.

Since the positions of the base station and the RIS are fixed once being deployed (regardless of a mobile RIS, such as a RIS mounted on an unmanned aerial vehicle), it may be regarded as that the channel from the same base station to the same RIS remains unchanged within a certain period of time (such as the coherence time of the channel).

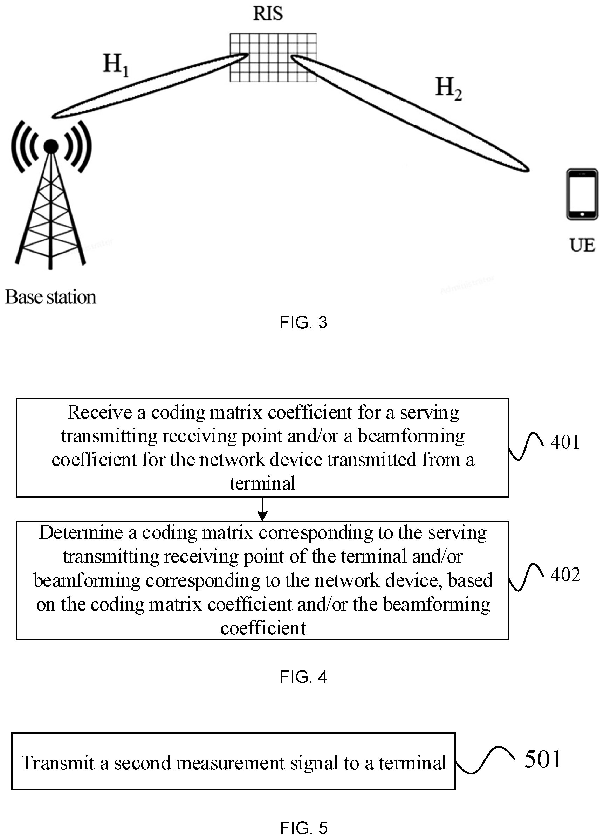

FIG. 3 is a schematic link diagram of a single RIS TRP according to an embodiment of the present application. Assuming that the UE selects three serving TRPs, and a link of one of the RIS TRPs is shown in FIG. 3, the measurement signals received by the UE are:

$$y_1 = H_2 F H_1 B s_1, \quad y_2 = H_2 F s_2$$

where $s_1$ is the first measurement signal transmitted from the base station, $s_2$ is the second measurement signal transmitted from the RIS TRP, $y_1$ is the first measurement signal received by the terminal and forwarded by the RIS TRP, and $y_2$ is the second measurement signal received by the terminal and transmitted from the RIS TRP. $H_1$ is the channel from the base station to the RIS, $H_2$ is the channel from the RIS to the terminal, B is the base station beam, and F is the RIS beam, corresponding to the coding matrix of the RIS array.

The equivalent channel information $h$ of $H_2 F H_1 B$ can be obtained according to the measurement result of $y_1$, and the equivalent channel information $g$ of $H_2 F$ can be obtained according to the measurement result of $y_2$.

The UE measures three serving TRPs and obtains three sets of equivalent channel information, which are $(h_1, g_1)$, $(h_2, g_2)$, and $(h_3, g_3)$, respectively. These three sets of channel information are compared to derive the deviation coefficients for the three sets of channels, which are $(\lambda_1, \xi_1)$, $(\lambda_2, \xi_2)$, and $(\lambda_3, \xi_3)$, respectively. The TRP with the best quality (such as RSRP or Block Error Rate, BLER) among the three sets is selected, a deviation coefficient of which is set to $(1,1)$, and normalization is performed on the other two sets.

The normalized deviation coefficients are the coding matrix coefficients for RIS TRP and/or the beamforming coefficients for the base station, which are reported by the UE to the base station.

In some embodiments, a possible method for obtaining the coding matrix coefficient and beamforming coefficient is as follows.

It is assumed that the UE obtains three candidate serving TRPs through measurement, and these three candidate serving TRPs correspond to three sets of equivalent channel information, which are $(h_1, g_1)$, $(h_2, g_2)$, and $(h_3, g_3)$, respectively. Herein, $h_i$ $(i = 1,2,3)$ denotes the channel information of the base station-RIS-UE segment, and $g_i (i = 1,2,3)$ denotes the channel information of the RIS-UE segment. It is assumed that $\lambda_i$ $(i = 1,2,3)$ denotes the beamforming coefficient for the base station, and $\xi_i (i = 1,2,3)$ denotes the coding matrix coefficient for RIS TRP. $\lambda_i$ and $\xi_i$ may be calculated as follows:

$$\lambda_i = 3 tr(h_i^H h_i) / \sum_{j=1}^{3} tr(h_j^H h_j), i = 1,2,3$$

$$\xi_i = 3 tr(g_i^H g_i) / \sum_{j=1}^{3} tr(g_j^H g_j), i = 1,2,3$$

In some embodiments, a possible method for obtaining the coding matrix coefficient and beamforming coefficient is as follows.

It is assumed that the UE obtains three candidate serving TRPs through measurement, and these three candidate serving TRPs correspond to three sets of equivalent channel information, which are $(h_1, g_1)$, $(h_2, g_2)$, $(h_3, g_3)$, respectively. Herein, $h_i$ $(i = 1,2,3)$ denotes the channel information of the base station-RIS-UE segment, and $g_i(i = 1,2,3)$ denotes the channel information of the RIS-UE segment. It is assumed that $\lambda_i$ $(i = 1,2,3)$ denotes the beamforming coefficient for the base station, and $\xi_i(i = 1,2,3)$ denotes the coding matrix coefficient for RIS TRP. $\lambda_i$ and $\xi_i$ may be calculated as follows:

$$\lambda_i = tr(h_i^H h_i)/\sum_{j=1}^{3}\left(tr\left(h_j^H h_j\right) + \alpha I\right), i = 1,2,3$$

$$\xi_i = tr(g_i^H g_i)/\sum_{j=1}^{3}\left(tr\left(g_j^H g_j\right) + \alpha I\right), i = 1,2,3$$

where $I$ is an identity matrix, and $\alpha$ denotes the regularization term used to balance maximizing the received power of the target UE and minimizing interference to other UEs. The smaller the value of $\alpha$, the less interference is made to other users. When $\alpha$ is infinitely large, it is equivalent to maximizing the received power of the target UE.

In some embodiments, a possible method for obtaining the coding matrix coefficient and beamforming coefficient is as follows.

It is assumed that the UE obtains three candidate serving TRPs through measurement, and these three candidate serving TRPs correspond to three sets of equivalent channel information, which are $(h_1, g_1)$, $(h_2, g_2)$, $(h_3, g_3)$, respectively. Herein, $h_i$ (i = 1,2,3) denotes the channel information of the base station-RIS-UE segment, and $g_i(i = 1,2,3)$ denotes the channel information of the RIS-UE segment. It is assumed that $\lambda_i$ $(i = 1,2,3)$ denotes the beamforming coefficient for the base station, and $\xi_i(i = 1,2,3)$ denotes the coding matrix coefficient for RIS TRP. Herein, $(h_1, g_1)$ denotes the channel information corresponding to the first candidate serving TRP, and the channel quality corresponding to the first candidate serving TRP is optimal (e.g., maximum RSRP). $\lambda_i$ and $\xi_i$ may be calculated as follows:

$$\lambda_i = tr(h_i^H h_i)/tr(h_1^H h_1), i = 1,2,3$$

$$\xi_i = tr(g_i^H g_i)/tr(g_1^H g_1), i = 1,2,3$$

In practical implementation, there can be multiple ways to calculate matrix coding coefficients and beamforming coefficients, which are not limited in the embodiments of the present application.

FIG. 4 is a second schematic flowchart illustrating a beamforming method according to an embodiment of the present application. As shown in FIG. 4, the method is performed by a network device, such as a 5G base station, and the method includes at least the following steps.

At step 401, receive a coding matrix coefficient for a serving transmitting receiving point and/or a beamforming coefficient for the network device transmitted from a terminal.

At step 402, determine a coding matrix corresponding to the serving transmitting receiving point of the terminal and/or beamforming corresponding to the network device, based on the coding matrix coefficient and/or the beamforming coefficient.

In an embodiment, the network device receives the coding matrix coefficient for the serving transmitting receiving point and/or the beamforming coefficient for the network device reported by the terminal, thereby determining the coordinated beamforming scheme of the terminal.

Coordinated beamforming includes beamforming corresponding to the serving transmitting receiving point of the terminal and/or beamforming corresponding to the network device. Herein, the coding matrix corresponding to the serving transmitting receiving point refers to the beamforming corresponding to the serving transmitting receiving point.

In an embodiment of the present application, the terminal selects the serving transmitting receiving point by itself. If the terminal reports the selected serving transmitting receiving point, the network device will use the terminal's report as the reference. If the terminal does not report the selected serving transmitting receiving point, the network device can assume that the serving transmitting receiving point of the terminal has not been changed compared to the previous moment.

In some embodiments, the network device can adjust the serving transmitting receiving point.

In some embodiments, the terminal can also report channel information, and the network device performs selection of the serving transmitting receiving point and calculation of coordinated beamforming for the terminal.

In a beamforming method according to an embodiment of the present application, the network device determines the coordinated beamforming scheme of the terminal according to the serving transmitting receiving point selected by the terminal, and the coding matrix coefficient for the serving transmitting receiving point, and/or the beamforming coefficient for the network device, thereby improving the performance of coordinated beamforming and reducing measurement overhead.

In some embodiments, the method further includes:

transmitting a first measurement signal to the terminal or a transmitting receiving point,

where the transmitting receiving point is configured to forward the first measurement signal to the terminal, and the first measurement signal is used to determine a first measurement result, where the first measurement signal includes channel information from the network device to the terminal through the transmitting receiving point, and the first measurement result is used to determine the serving transmitting receiving point, and the coding matrix coefficient for the serving transmitting receiving point and/or the beamforming coefficient for the network device.

In an embodiment, the network device needs to transmit the first measurement signal first. There are two paths for the first measurement signal to reach the terminal side from the network side. One is a single-hop link, where the network device directly transmits the signal to the terminal, and the other is a dual-hop link, where the signal is forwarded to the terminal by the transmitting receiving point.

The first measurement signal is used to determine the first measurement result. In case that the first measurement signal reaches the terminal through a single-hop link, the first measurement result includes channel information from the network device directly to the terminal, for example, the first measurement result is used to determine the channel information of the gNB-UE. In case that the first measurement signal reaches the terminal through a dual-hop link, the first measurement result includes channel information from the network device to the terminal through a transmitting receiving point, for example, the first measurement signal is used to determine the channel information of the gNB-RIS-UE.

The first measurement result is used by the terminal to determine the serving transmitting receiving point, and the coding matrix coefficient for the serving transmitting receiving point and/or the beamforming coefficient for the network device.

In some embodiments, the method further includes:

transmitting configuration information to the terminal or the transmitting receiving point, where the configuration information includes first configuration information transmitted to the terminal, or second configuration information transmitted to the transmitting receiving point,

where the first configuration information includes at least one of: information for indicating the first measurement signal, information for indicating a time point at which the terminal receives the first measurement signal, information for indicating the second measurement signal, or information for indicating a time point at which the terminal receives the second measurement signal,

the second configuration information includes at least one of: information for indicating the coding matrix for the transmitting receiving point, or information for indicating a time point at which the transmitting receiving point transmits the second measurement signal, and

the second measurement signal is a measurement signal transmitted from the transmitting receiving point to the terminal.

In an embodiment, the network side can instruct the transmitting receiving point to transmit the second measurement signal, instruct the first measurement signal (or precoding signal by the network side) which is currently used to the terminal, and instruct the terminal to receive and measure the measurement signal at a specified time point.

That is, the time point at which the terminal receives the first measurement signal and/or the second measurement signal, and the time point at which the transmitting receiving point transmits the second measurement signal, may be configured by the network device.

The network device transmits the first configuration information to the terminal, where the first configuration information includes at least one of: information indicating the first measurement signal, information indicating the time point at which the terminal receives the first measurement signal, information indicating the second measurement signal,

and information indicating the time point at which the terminal receives the second measurement signal.

The network device transmits the second configuration information to the transmitting receiving point, where the second configuration information includes at least one of: information indicating the coding matrix for the transmitting receiving point, and information indicating the time point at which the transmitting receiving point transmits the second measurement signal to the terminal.

In some embodiments, the coding matrix corresponding to the serving transmitting receiving point and/or the beamforming corresponding to the network device are determined based on the following formula:

$$F_i = \xi_i F_{i,0}$$

$$B = \sum_{i=1}^{N} \lambda_i B_i$$

where $F_i$ is the coding matrix corresponding to an $i$-th serving transmitting receiving point, $\xi_i$ is the coding matrix coefficient corresponding to the $i$-th serving transmitting receiving point, $F_{i,0}$ is a beam used by the $i$-th serving transmitting receiving point during the measurement process, B is the beamforming corresponding to the network device, N is the number of the serving transmitting receiving points determined by the terminal, $\lambda_i$ is the beamforming coefficient for the network device corresponding to the $i$-th serving transmitting receiving point, $B_i$ is the beam for the network device corresponding to the $i$-th serving transmitting receiving point, and $i$ and N are integers greater than or equal to 1.

A specific example is provided below to further illustrate the beamforming method according to the present application.

For a base station, the following steps can be included.

At step 1, the base station configures a reference signal (a base station measurement signal), a RIS TRP measurement signal, and corresponding measurement time points (specifically including the time points at which the UE receives the base station measurement signal and the RIS TRP measurement signal) for the UE, and transmits the base station measurement signal to the UE or TRP.

At step 2, the base station configures a RIS coding matrix (control matrix), the RIS TRP measurement signal, and the time point at which the RIS transmits the RIS TRP measurement signal for the RIS.

At step 3, the base station receives the serving TRPs (including the RIS TRP) and the corresponding measurement information reported by the UE, where the measurement information includes the coding matrix coefficient for the serving TRPs and/or the beamforming coefficient for the base station.

At step 4, the base station determines the m (m≤n) TRPs serving the UE and the corresponding coordinated beamforming (base station beamforming and/or RIS coding matrix), according to the serving TRPs reported by the UE, the coding matrix coefficients for the serving TRPs, and the beamforming coefficient for the base station. Herein, the RIS coding matrix corresponds to the beamforming of the RIS. The specific process is as follows.

It is assumed that the base station receives three serving TRPs reported by the UE, the beamforming coefficient for the base station and/or the coding matrix coefficients for the RIS TRPs, which are $(\lambda_1,\xi_1)$, $(\lambda_2,\xi_2)$, $(\lambda_3,\xi_3)$. Herein, $\lambda_i$ ($i$ = 1,2,3) is the beamforming coefficient for the base station, and $\xi_i$ ($i$ = 1,2,3) is the coding matrix coefficient for the RIS TRP. The base station finally selects these three serving TRPs (corresponding to different beam indices, different sets of measurement reference signals, or TRP sequence number indications) for serving the UE. The base station beams and RIS beams used for measurements of the three serving TRPs are $(B_1,F_1)$, $(B_2,F_2)$, $(B_3,F_3)$, and $B_i$ ($i$ = 1,2,3) is the base station beam, and $F_i$ ($i$ = 1,2,3) is the coding matrix for the RIS TRP. The base station can determine the coordinated beamforming scheme for the UE according to the following formula:

$$B = \sum_{i=1}^{3} \lambda_i B_i$$

$$F_i = \xi_i F_{i,0}$$

The formula is used by the base station to calculate the coordinated beamforming (including the base station beamforming and RIS coordinated beamforming) to be used by the user at the next moment, according to the coefficients and beams reported by the user (the base station beam B and RIS beam F used during the measurement process). Each $F_i$ is the coding matrix mapped onto each RIS array.

FIG. 5 is a third schematic flowchart illustrating a beamforming method according to an embodiment of the present application. As shown in FIG. 5, the method is performed by a TRP, such as a RIS TRP, and the method includes at least the following step.

At step 501, transmit a second measurement signal to a terminal, where the second measurement signal is used to determine a serving transmitting receiving point of the terminal, and a coding matrix coefficient corresponding to the serving transmitting receiving point.

In an embodiment, a second measurement signal is added to the transmitting receiving point, and the second measurement signal is transmitted to the terminal from the transmitting receiving point. In an embodiment, in case that the transmitting receiving point receives a first measurement signal transmitted from the network device, the transmitting receiving point is triggered to transmit the second measurement signal.

The second measurement signal is transmitted to the terminal from the transmitting receiving point. By measuring the second measurement signal, the channel information from the transmitting receiving point to the terminal may be obtained, such as the channel information for the RIS-UE. The channel information from the transmitting receiving point to the terminal is used to assist the terminal in selecting the serving transmitting receiving point and determining the coding matrix coefficient corresponding to the serving transmitting receiving point.

For example, by using the programmable and tunable characteristics of RIS, a RIS TRP measurement signal can be added at the RIS node.

In a beamforming method provided in an embodiment of the present application, a second measurement signal is added to a transmitting receiving point, and the terminal can distinguish whether the measurement signal is transmitted directly from the network device or forwarded through the transmitting receiving point. The terminal can also distinguish measurement signals forwarded from different transmitting receiving points. Therefore, the terminal can select serving transmitting receiving points according to the measurement result by itself and report the information on the coordinated beamforming to a network side, thereby improving beamforming performance of a system and reducing measurement overhead.

In some embodiments, the method further includes:

receiving second configuration information transmitted from a network device; and

determining a coding matrix and/or a time point at which the second measurement signal is transmitted to the terminal based on the second configuration information.

In an embodiment, the coding matrix for the transmitting receiving point and the time point at which the second measurement signal is transmitted to the terminal are configured by the network device.

In an embodiment, a second measurement signal is transmitted to the terminal only in case that the first measurement signal transmitted from the network device has been received.

In an embodiment, a second measurement signal is transmitted to the terminal while the first measurement signal is forwarded to the terminal.

In an embodiment, a second measurement signal is transmitted to the terminal after the first measurement signal is forwarded to the terminal.

In some embodiments, transmitting the second measurement signal to the terminal includes:

receiving a first measurement signal transmitted from a network device; and
switching a coding matrix, forwarding the first measurement signal to the terminal, and transmitting the second measurement signal to the terminal, based on a predefined rule or an instruction from the network device.

In an embodiment, the transmitting receiving point switches the coding matrix, forwards the first measurement signal to the terminal, and transmits the second measurement signal to the terminal, based on a predefined rule or an instruction from the network device.

For example, the RIS node switches the coding matrix, reflects the incident signal to the UE, and transmits the RIS TRP measurement signal to the UE, based on a predefined rule or an instruction from the network device.

In some embodiments, transmitting the second measurement signal to the terminal includes:
transmitting the second measurement signal to the terminal from a control node of the transmitting receiving point.

In an embodiment, the transmitting receiving point may transmit the second measurement signal to the terminal through the control node.

In some embodiments, the transmitting receiving point modulates the first measurement signal transmitted from the network device, and forwards the modulated first measurement signal to the terminal. Modulation methods include, for example, phase modulation and amplitude modulation.

In some embodiments, when forwarding the modulated first measurement signal to the terminal, the transmitting receiving point may also transmit the second measurement signal.

For example, the RIS transmits the RIS TRP measurement signal through the control node.

For example, the RIS modulates the incident signal of the gNB and transmits the reflected signal.

In some embodiments, in a case of transmitting the second measurement signal through the control node, the control node and the transmitting receiving point are Quasi-Co-Location (QCL).

A specific example is provided below to further illustrate the beamforming method according to the present application.

For the RIS TRP, the beamforming method switches the coding matrix, reflects the incident signal to the UE, and transmits the RIS TRP measurement signal, based on the instruction from the base station or the predefined rule.

In some embodiments, the RIS may transmit the RIS TRP measurement signal through the control node, or modulate the incident signal and add the RIS TRP measurement signal to the reflected signal.

In some embodiments, when the RIS TRP transmits the measurement signal using the control node, the control node and the RIS TRP are QCL.

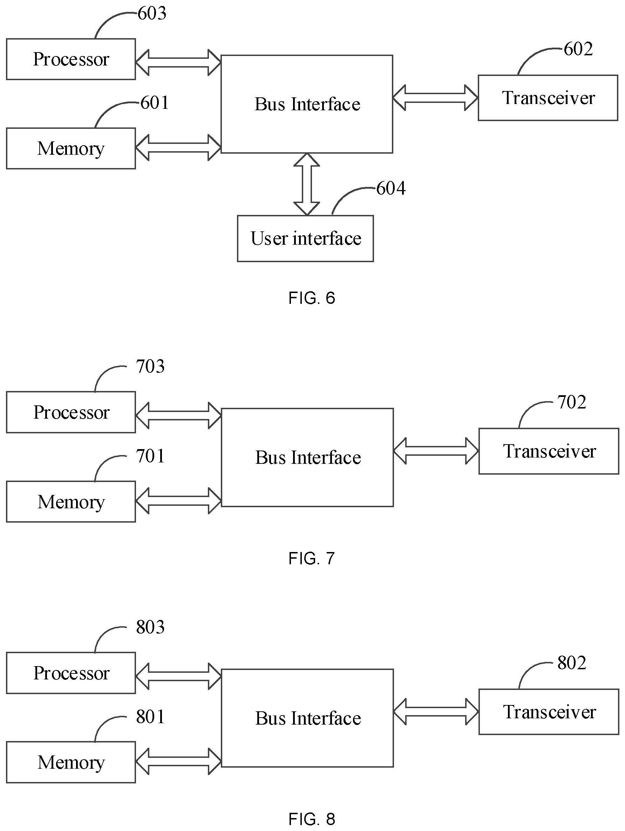

FIG. 6 is a schematic structural diagram of a terminal according to an embodiment of the present application. As shown in FIG. 6, the terminal includes a memory 601, a transceiver 602, and a processor 603.

The memory 601 is configured to store a computer program, and the transceiver 602 is configured to transmit and receive data under control of the processor 603.

In an embodiment, the transceiver 602 is configured to receive and transmit data under the control of processor 603.

In an embodiment, as shown in FIG. 6, a bus architecture can include any number of interconnected buses and bridges, specifically linked together by various circuits with one or more processors represented by the processor 603 and a memory represented by the memory 601. The bus architecture can further link various other circuits together, such as a peripheral device, a voltage regulator, and a power management circuit, which are well known in the art and are therefore not further described herein. A bus interface provides an interface. The transceiver 602 can include a plurality of components, such as a transmitter and a receiver, providing a unit for communicating with various other devices on a transmission medium, such as a wireless channel, a wired channel, an optical cable, and the like. For different user equipment, the user interface 604 can also be an interface that capable of externally or internally connecting to required devices, and the connected devices include, but are not limited to, a keypad, a display, a speaker, a microphone, a joystick, and the like

The processor 603 is responsible for managing the bus architecture and general processing, and the memory 601 can store the data used by the processor 603 when performing operations.

In some embodiments, the processor 603 may be a Central Processing Unit (CPU), an Application-Specific Integrated Circuit (ASIC), a Field-Programmable Gate Array (FPGA), or a Complex Programmable Logic Device (CPLD), and the processor may also employ a multi-core architecture.

The processor executes any of the methods provided in the embodiments of the present application according to the obtained executable instructions by calling a computer program stored in the memory. The processor and the memory may also be physically separated in arrangement.

The processor 603 is configured to read the computer program from the memory 601 and perform operations of:

measuring a first measurement signal and a second measurement signal to determine a measurement result;

determining a serving transmitting receiving point, and a coding matrix coefficient for the serving transmitting receiving point and/or a beamforming coefficient for a network device based on the measurement result; and

transmitting the coding matrix coefficient for the serving transmitting receiving point and/or the beamforming coefficient for the network device to the network device,

where the first measurement signal includes a measurement signal transmitted from the network device through a transmitting receiving point, and the second measurement signal is a measurement signal transmitted from the transmitting receiving point.

In some embodiments, determining the measurement result includes:

measuring the first measurement signal to determine a first measurement result, where the first measurement result includes channel information from the network device to the terminal through the transmitting receiving point; and measuring the second measurement signal to determine a second measurement result, where the second measurement result includes channel information from the transmitting receiving point to the terminal.

In some embodiments, determining the serving transmitting receiving point, and the coding matrix coefficient for the serving transmitting receiving point and/or the beamforming coefficient for the network device based on the measurement result includes:

determining the serving transmitting receiving point, and the coding matrix coefficient for the serving transmitting receiving point and/or the beamforming coefficient for the network device, based on a predefined rule or an instruction from the network device and the measurement result.

In some embodiments, the coding matrix coefficient for the serving transmitting receiving point and/or the beamforming coefficient for the network device are determined according to the following formula:

$$\xi_i = tr(g_i^H g_i)/tr(g_n^H g_n)$$

$$\lambda_i = tr(h_i^H h_i)/tr(h_n^H h_n)$$

where $\xi_i$ is the coding matrix coefficient for an $i$-th serving transmitting receiving point, $\lambda_i$ is the beamforming coefficient for the network device corresponding to the $i$-th serving transmitting receiving point, $g_i$ is channel information from the $i$-th serving transmitting receiving point to the terminal, $h_i$ is channel information from the network device to the terminal through the $i$-th serving transmitting receiving point, and $(h_n, g_n)$ is channel information corresponding to a $n$-th serving transmitting receiving point, where the $n$-th serving transmitting receiving point is a transmitting receiving point with an optimal channel quality among the serving transmitting receiving points determined by the terminal, and $i$ and $n$ are integers greater than or equal to 1.

In some embodiments, the processor 603 is configured to read the computer program from the memory 601 and further perform operations of:

receiving first configuration information transmitted from the network device, where the first configuration information includes at least one of: information for indicating the first measurement signal, information for indicating a time point at which the terminal receives the first measurement signal, information for indicating the second measurement signal, or information for indicating a time point at which the terminal receives the second measurement signal; and

receiving the first measurement signal and/or the second measurement signal, based on the first configuration information.

It should be noted that the above-mentioned terminal provided in the embodiment of the present application can implement all the methods and steps implemented by the above-mentioned method performed by the terminal according to the embodiments of the present application, and can achieve the same technical effect. The parts of the embodiment and the beneficial effect thereof that are identical to those of the methods according to the embodiments of the present application will not be repeated in detail herein.

FIG. 7 is a schematic structural diagram of a network device according to an embodiment of the present application. The network device includes a memory 701, a transceiver 702, and a processor 703.

The memory 701 is configured to store a computer program, and the transceiver 702 is configured to transmit and receive data under control of the processor 703.

In an embodiment, transceiver 702 is configured to receive and transmit data under the control of processor 703.

In an embodiment, as shown in FIG. 7, a bus architecture can include any number of interconnected buses and bridges, specifically linked together by various circuits with one or more processors represented by the processor 703 and a memory represented by the memory 701. The bus architecture can further link various other circuits together, such as a peripheral device, a voltage regulator, and a power management circuit, which are well known in the art and are therefore not further described herein. A bus interface provides an interface.

The transceiver 702 can include a plurality of components, such as a transmitter and a receiver, providing a unit for communicating with various other devices on a transmission medium, such as a wireless channel, a wired channel, an optical cable, and the like. The processor 703 is responsible for managing the bus architecture and general processing, and the memory 701 can store the data used by the processor 703 when performing operations.

The processor 703 may be a Central Processing Unit (CPU), an Application-Specific Integrated Circuit (ASIC), a Field-Programmable Gate Array (FPGA), or a Complex Programmable Logic Device (CPLD), and the processor may also employ a multi-core architecture.

The processor 703 is configured to read the computer program from the memory 701 and perform operations of:

receiving a coding matrix coefficient for a serving transmitting receiving point and/or a beamforming coefficient for the network device transmitted from a terminal; and

determining a coding matrix corresponding to the serving transmitting receiving point of the terminal and/or the beamforming corresponding to the network device, based on the coding matrix coefficient and/or the beamforming coefficient.

In some embodiments, the processor 703 is configured to read the computer program from the memory 701 and further perform an operation of:

transmitting a first measurement signal to the terminal or a transmitting receiving point,

where the transmitting receiving point is configured to forward the first measurement signal to the terminal, and the first measurement signal is used to determine a first measurement result, where the first measurement signal includes channel information from the network device to the terminal through the transmitting receiving point, and the first measurement result is used to determine the serving transmitting receiving point, and the coding matrix coefficient for the serving transmitting receiving point and/or the beamforming coefficient for the network device.

In some embodiments, the processor 703 is configured to read the computer program from the memory 701 and further perform an operation of:

transmitting configuration information to the terminal or the transmitting receiving point, where the configuration information includes first configuration information transmitted to the terminal, or second configuration information transmitted to the transmitting receiving point,
where the first configuration information includes at least one of: information for indicating the first measurement signal, information for indicating a time point at which the terminal receives the first measurement signal, information for indicating the second measurement signal, or information for indicating a time point at which the terminal receives the second measurement signal,
the second configuration information includes at least one of: information for indicating the coding matrix for the transmitting receiving point, or information for indicating a time point at which the transmitting receiving point transmits the second measurement signal, and
the second measurement signal is a measurement signal transmitted from the transmitting receiving point to the terminal.

In some embodiments, the coding matrix corresponding to the serving transmitting receiving point and/or the beamforming corresponding to the network device are determined based on the following formula:

$$F_i = \xi_i F_{i,0}$$

$$B = \sum_{i=1}^{N} \lambda_i B_i$$

where $F_i$ is the coding matrix corresponding to an $i$-th serving transmitting receiving point, $\xi_i$ is the coding matrix coefficient corresponding to the $i$-th serving transmitting receiving point, $F_{i,0}$ is a beam used by the $i$-th serving transmitting receiving point during the measurement process, B is the beamforming corresponding to the network device, N is the number of the serving transmitting receiving points determined by the terminal, $\lambda_i$ is the beamforming coefficient for the network device corresponding to the $i$-th serving transmitting receiving point, $B_i$ is the beam for the network device corresponding to the $i$-th serving transmitting receiving point, and $i$ and N are integers greater than or equal to 1.

It should be noted that the above-mentioned network device provided in the embodiment of the present application can implement all the methods and steps implemented by the above-mentioned method performed by the network device according to the embodiments of the present application, and can achieve the same technical effect. The parts of the embodiment and the beneficial effect thereof that are identical to those of the methods according to the embodiments of the present application will not be described in detail herein.

FIG. 8 is a schematic structural diagram of a transmitting receiving point according to an embodiment of the present application. The transmitting receiving point includes a memory 801, a transceiver 802, and a processor 803.

The memory 801 is configured to store a computer program, and the transceiver 802 is configured to transmit and receive data under control of the processor 803.

In an embodiment, transceiver 802 is configured to receive and transmit data under the control of processor 803.

In an embodiment, as shown in FIG. 8, a bus architecture can include any number of interconnected buses and bridges, specifically linked together by various circuits with one or more processors represented by the processor 803 and a memory represented by the memory 801. The bus architecture can further link various other circuits together, such as a peripheral device, a voltage regulator, and a power management circuit, which are well known in the art and are therefore not further described herein. A bus interface provides an interface.

The transceiver 802 can include a plurality of components, such as a transmitter and a receiver, providing a unit for communicating with various other devices on a transmission medium, such as a wireless channel, a wired channel, an optical cable, and the like. The processor 803 is responsible for managing the bus architecture and general processing, while the memory 801 can store the data used by the processor 803 when performing operations.

The processor 803 may be a Central Processing Unit (CPU), an Application-Specific Integrated Circuit (ASIC), a Field-Programmable Gate Array (FPGA), or a Complex Programmable Logic Device (CPLD), and the processor may also employ a multi-core architecture.

The processor 803 is configured to read the computer program from the memory 801 and perform an operation of:

transmitting a second measurement signal to a terminal,

where the second measurement signal is used to determine a serving transmitting receiving point of the terminal, and a coding matrix coefficient corresponding to the serving transmitting receiving point.

In some embodiments, the processor 803 is configured to read the computer program from the memory 801 and further perform operations of:

receiving second configuration information transmitted from a network device; and

determining a coding matrix and/or a time point at which the second measurement signal is transmitted to the terminal based on the second configuration information.

In some embodiments, transmitting the second measurement signal to the terminal includes:

receiving a first measurement signal transmitted from a network device; and

switching a coding matrix, forwarding the first measurement signal to the terminal, and transmitting the second measurement signal to the terminal, based on a predefined rule or an instruction from the network device.

In some embodiments, transmitting the second measurement signal to the terminal includes:
transmitting the second measurement signal to the terminal from a control node of the transmitting receiving point.

It should be noted that the above-mentioned transmitting receiving point provided in the embodiment of the present application can implement all the methods and steps implemented by the above-mentioned method performed by the transmitting receiving point according to the embodiments of the present application, and may achieve the same effect. The parts of the embodiment and the beneficial effect thereof that are identical to those of the methods according to the embodiments of the present application will not be described in detail herein

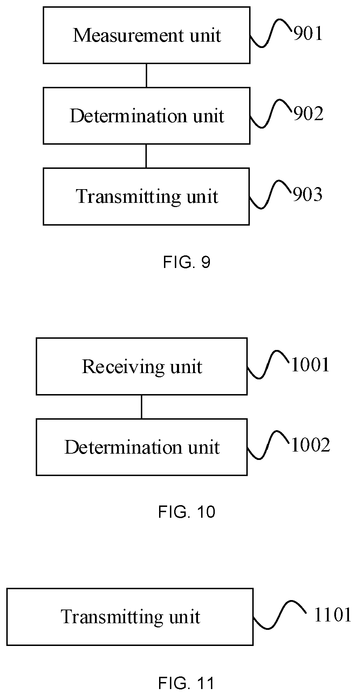

FIG. 9 is a first schematic structural diagram illustrating a beamforming apparatus according to an embodiment of the present disclosure. As shown in FIG. 9, the apparatus at least includes:

a measurement unit 901, configured to measure a first measurement signal and a second measurement signal to determine a measurement result;
a determination unit 902, configured to determine a serving transmitting receiving point, and a coding matrix coefficient for the serving transmitting receiving point and/or a beamforming coefficient for a network device based on the measurement result; and
a transmitting unit 903, configured to transmit the coding matrix coefficient for the serving transmitting receiving point and/or the beamforming coefficient for the network device to the network device,
where the first measurement signal includes a measurement signal transmitted from the network device through a transmitting receiving point, and the second measurement signal is the measurement signal transmitted from the transmitting receiving point.

In some embodiments, the measurement unit 901 includes:

a first measurement module, configured to measure the first measurement signal to determine a first measurement result, where the first measurement result includes channel information from the network device to the terminal through the transmitting receiving point; and

a second measurement module, configured to measure the second measurement signal to determine a second measurement result, where the second measurement result includes channel information from the transmitting receiving point to the terminal.

In some embodiments, the determination unit 902 is configured to:
determine the serving transmitting receiving point, and the coding matrix coefficient for the serving transmitting receiving point and/or the beamforming coefficient for the network device, based on a predefined rule or an instruction from the network device and the measurement result.

In some embodiments, the coding matrix coefficient for the serving transmitting receiving point and/or the beamforming coefficient for the network device are determined according to the following formula:

$$\xi_i = tr(g_i^H g_i)/tr(g_n^H g_n)$$

$$\lambda_i = tr(h_i^H h_i)/tr(h_n^H h_n)$$

where $\xi_i$ is the coding matrix coefficient for an $i$-th serving transmitting receiving point, $\lambda_i$ is the beamforming coefficient for the network device corresponding to the $i$-th serving transmitting receiving point, $g_i$ is channel information from the $i$-th serving transmitting receiving point to the terminal, $h_i$ is channel information from the network device to the terminal through the $i$-th serving transmitting receiving point, and $(h_n, g_n)$ is channel information corresponding to a $n$-th serving transmitting receiving point, where the $n$-th serving transmitting receiving point is a transmitting receiving point with an optimal channel quality among the serving transmitting receiving points determined by the terminal, and $i$ and $n$ are integers greater than or equal to 1.

In some embodiments, the apparatus further includes:

a first receiving unit, configured to receive first configuration information transmitted from the network device, where the first configuration information includes at least one of: information for indicating the first measurement signal, information for indicating a time point at which the terminal receives the first measurement signal, information for indicating the second measurement signal, or information for indicating a time point at which the terminal receives the second measurement signal; and

a second receiving unit, configured to receive the first measurement signal and/or the second measurement signal, based on the first configuration information

FIG. 10 is a second schematic structural diagram illustrating a beamforming apparatus according to an embodiment of the present application. As shown in FIG. 10, the apparatus at least includes:

a receiving unit 1001, configured to receive a coding matrix coefficient for a serving transmitting receiving point and/or a beamforming coefficient for a network device transmitted from a terminal; and

a determination unit 1002, configured to determine a coding matrix corresponding to the serving transmitting receiving point of the terminal and/or beamforming corresponding to the network device, based on the coding matrix coefficient and/or the beamforming coefficient.

In some embodiments, the apparatus further includes:

a first transmitting unit, configured to transmit a first measurement signal to the terminal or a transmitting receiving point;

where the transmitting receiving point is configured to forward the first measurement signal to the terminal, and the first measurement signal is used to determine a first measurement result, where the first measurement signal includes channel information from the network device to the terminal through the transmitting receiving point, and the first measurement result is used to determine the serving transmitting receiving point, and the coding matrix coefficient for the serving transmitting receiving point and/or the beamforming coefficient for the network device.

In some embodiments, the apparatus further includes:

a second transmitting unit, configured to transmit configuration information to the terminal or the transmitting receiving point, where the configuration information includes first configuration information transmitted to the terminal, or second configuration information transmitted to the transmitting receiving point,

where the first configuration information includes at least one of: information for indicating the first measurement signal, information for indicating a time point at which the terminal receives the first measurement signal, information for indicating the second measurement signal, or information for indicating a time point at which the terminal receives the second measurement signal,

the second configuration information includes at least one of: information for indicating the coding matrix for the transmitting receiving point, or information for indicating a time point at which the transmitting receiving point transmits the second measurement signal, and

the second measurement signal is a measurement signal transmitted from the transmitting receiving point to the terminal.

In some embodiments, the coding matrix corresponding to the serving transmitting receiving point and/or the beamforming corresponding to the network device are determined according to the following formula:

$$F_i = \xi_i F_{i,0}$$

$$B = \sum_{i=1}^{N} \lambda_i B_i$$

where $F_i$ is the coding matrix corresponding to an $i$-th serving transmitting receiving point, $\xi_i$ is the coding matrix coefficient corresponding to the $i$-th serving transmitting receiving point, $F_{i,0}$ is a beam used by the $i$-th serving transmitting receiving point during the measurement process, B is the beamforming corresponding to the network device, N is the number of the serving transmitting receiving points determined by the terminal, $\lambda_i$ is the beamforming coefficient for the network device corresponding to the $i$-th serving transmitting receiving point, $B_i$ is the beam for the network device corresponding to the $i$-th serving transmitting receiving point, and $i$ and N are integers greater than or equal to 1.

FIG. 11 is a third schematic structural diagram illustrating a beamforming apparatus according to an embodiment of the present disclosure. As shown in FIG. 11, the apparatus at least includes:

a transmitting unit 1101, configured to transmit a second measurement signal to a terminal,

where the second measurement signal is used for determining a serving transmitting receiving point of the terminal, and a coding matrix coefficient corresponding to the serving transmitting receiving point.

In some embodiments, the apparatus further includes:

a first receiving unit, configured to receive second configuration information transmitted from a network device; and

a determination unit, configured to determine a coding matrix and/or a time point at which the second measurement signal is transmitted to the terminal based on the second configuration information.

In some embodiments, the transmitting unit 1101 includes:

a receiving module, configured to receive a first measurement signal transmitted from a network device; and

a first transmitting module, configured to switch a coding matrix, forward the first measurement signal to the terminal, and transmit the second measurement signal to the terminal, based on a predefined rule or an instruction from the network device.

In some embodiments, the transmitting unit 1101 includes:
a second transmitting module, configured to transmit the second measurement signal to the terminal from a control node of the transmitting receiving point.

The methods and the apparatus provided in various embodiments of the present application are based on the same concept. Since the principles by which the methods and the apparatus solve problems are similar, the implementation of the methods and the apparatus may be referred to with each other, and the repeated description will not be provided.

It should be noted that the division of units in the embodiments of the present application is illustrative and merely represents a logical functional division. In actual implementation, other division methods may be employed. Furthermore, the functional units in various embodiments of the present application may be integrated into a single processing unit, or each unit may exist physically as a separate unit, or two or more units may be integrated into a single unit. The aforementioned integrated unit may be implemented in the form of either hardware or a software functional unit.

If the integrated unit is implemented in the form of a software functional unit and sold or used as an independent product, it may be stored in a processor-readable storage medium. Based on this understanding, the substantial technical solution of the present application, or the part of the technical solution contributing to the related art, or all or part of the solution, can be embodied in the form of a software product. The computer software product is stored in a storage medium and includes several instructions for enabling a computer device (which may be a personal computer, a server, or a network device, and the like) or a processor to execute all or part of the steps of the method described in each embodiment of the present application. The aforementioned storage medium includes a USB flash drive, a portable storage device, a Read-Only Memory (ROM), a Random Access Memory (RAM), a magnetic disk or optical disk, and other media that may store program codes.

It should be noted that the aforementioned apparatus provided in the embodiment of the present application can implement all the methods and steps implemented by the method according to the embodiments of the present application, and can achieve the same effects. The parts of these embodiments that are identical to the method according to the embodiments of the present application and the beneficial effect thereof will not be repeated in detail herein.

According to an embodiment of the present application, there is further provided a non-transient readable storage medium storing a computer program which is configured to cause a computer to perform the beamforming methods provided by the embodiments described above. The method includes:

measuring a first measurement signal and a second measurement signal to determine a measurement result; determining a serving transmitting receiving point, and a coding matrix coefficient for the serving transmitting receiving point and/or a beamforming coefficient for a network device based on the measurement result; and transmitting the coding matrix coefficient for the serving transmitting receiving point and/or the beamforming coefficient for the network device to the network device, where the first measurement signal includes a measurement signal transmitted from the network device through a transmitting receiving point, and the second measurement signal is a measurement signal transmitted from the transmitting receiving point; or

receiving a coding matrix coefficient for a serving transmitting receiving point and/or a beamforming coefficient for a network device transmitted from a terminal; and determining a coding matrix corresponding to the serving transmitting receiving point of the terminal and/or beamforming corresponding to the network device, based on the coding matrix coefficient and/or the beamforming coefficient; or

transmitting a second measurement signal to a terminal, where the second measurement signal is used to determine a serving transmitting receiving point of the terminal, and a coding matrix coefficient corresponding to the serving transmitting receiving point.

The non-transitory readable storage medium can be any available medium or data storage device that is capable of access, including but not limited to a magnetic memory (such as a floppy disk, a hard disk, a magnetic tape, a magneto-optical disk (MO), and the like), an optical memory (such as a CD, a DVD, a BD, a HVD, and the like), and a semiconductor memory (such as a ROM, a EPROM, a EEPROM, a non-volatile memory (NAND FLASH), and a solid-state drive (SSD)), and the like.

Those skilled in the art will understand that the embodiments of the present application can be provided as methods, systems, or computer program products. Therefore, the embodiment of the present application can take the form of a complete hardware embodiment, a complete software embodiment, or a combination of a software and hardware embodiment. Furthermore, the present application can take the form of a computer program product implemented on one or more computer-usable storage media (including but not limited to a magnetic memory, an optical memory, and the like) containing a computer-usable program code.

The present application is described with reference to flowcharts and/or block diagrams of methods, devices (systems), and computer program products according to the embodiments of the present application. It should be understood that each process and/or block in the flowcharts and/or block diagrams, as well as combinations of processes and/or blocks in the flowcharts and/or block diagrams, can be implemented by computer-executable instructions. These computer-executable instructions may be provided to a processor of a general-purpose computer, a special-purpose computer, an embedded processor, or other programmable data processing apparatus to produce a machine, such that the instructions executed by the processor of the computer or other programmable data processing apparatus produce an apparatus for implementing the functions specified in one or more processes in the flowcharts and/or one or more blocks in the block diagrams.

These processor-executable instructions may also be stored in a processor-readable memory that is capable to direct a computer or other programmable data processing apparatus to operate in a specific manner, such that the instructions stored in the processor-readable memory produce a product including an instruction apparatus that implements the functions specified in one or more processes in the flowcharts and/or one or more blocks in the block diagrams.

These processor-executable instructions can also be loaded onto a computer or other programmable data processing apparatus, so that a series of operating steps are performed on the computer or other programmable apparatus to produce a process implemented by a computer. Therefore, the instructions performed on the computer or other programmable apparatus provide steps for implementing the functions specified in one or more processes in the flowcharts and/or one or more blocks in the block diagrams.

Obviously, those skilled in the art can make various modifications and variations to the present application without departing from the scope of the present application. Therefore, if such modifications and variations fall within the scope of the claims of the present application and their equivalents, the present application is intended to include such modifications and variations.

## Claims

1. A beamforming method performed by a terminal, comprising:

   measuring a first measurement signal and a second measurement signal to determine a measurement result;
   determining a serving transmitting receiving point, and a coding matrix coefficient for the serving transmitting receiving point and/or a beamforming coefficient for a network device based on the measurement result; and
   transmitting the coding matrix coefficient for the serving transmitting receiving point and/or the beamforming coefficient for the network device to the network device,
   wherein the first measurement signal comprises a measurement signal transmitted from the network device through a transmitting receiving point, and the second measurement signal is a measurement signal transmitted from the transmitting receiving point.

2. The beamforming method according to claim 1, wherein determining the measurement result comprises:

   measuring the first measurement signal to determine a first measurement result, wherein the first measurement result comprises channel information from the network device to the terminal through the transmitting receiving point; and
   measuring the second measurement signal to determine a second measurement result, wherein the second measurement result comprises channel information from the transmitting receiving point to the terminal.

3. The beamforming method according to claim 1, wherein determining the serving transmitting receiving point, and the coding matrix coefficient for the serving transmitting receiving point and/or the beamforming coefficient for the network device based on the measurement result comprises:
   determining the serving transmitting receiving point, and the coding matrix coefficient for the serving transmitting receiving point and/or the beamforming coefficient for the network device, based on a predefined rule or an instruction from the network device and the measurement result.

4. The beamforming method according to claim 3, wherein the coding matrix coefficient for the serving transmitting receiving point and/or the beamforming coefficient for the network device are determined based on the following formula:

$$\xi_i = tr(g_i^H g_i)/tr(g_n^H g_n)$$

$$\lambda_i = tr(h_i^H h_i)/tr(h_n^H h_n)$$

wherein $\xi_i$ is the coding matrix coefficient for an $i$-th serving transmitting receiving point, $\lambda_i$ is the beamforming coefficient for the network device corresponding to the $i$-th serving transmitting receiving point, $g_i$ is channel information from the $i$-th serving transmitting receiving point to the terminal, $h_i$ is channel information from the network device to the terminal through the $i$-th serving transmitting receiving point, and $(h_n, g_n)$ is channel information

corresponding to a $n$-th serving transmitting receiving point, wherein the $n$-th serving transmitting receiving point is a transmitting receiving point with an optimal channel quality among serving transmitting receiving points determined by the terminal, and $i$ and $n$ are integers greater than or equal to 1.

5. The beamforming method according to claim 1, further comprising:

receiving first configuration information transmitted from the network device, wherein the first configuration information comprises at least one of: information for indicating the first measurement signal, information for indicating a time point at which the terminal receives the first measurement signal, information for indicating the second measurement signal, or information for indicating a time point at which the terminal receives the second measurement signal; and
receiving the first measurement signal and/or the second measurement signal, based on the first configuration information.

6. A beamforming method performed by a network device, comprising:

receiving a coding matrix coefficient for a serving transmitting receiving point and/or a beamforming coefficient for the network device transmitted from a terminal; and
determining a coding matrix corresponding to the serving transmitting receiving point of the terminal and/or beamforming corresponding to the network device, based on the coding matrix coefficient and/or the beamforming coefficient.

7. The beamforming method according to claim 6, further comprising:

transmitting a first measurement signal to the terminal or a transmitting receiving point,
wherein the transmitting receiving point is configured to forward the first measurement signal to the terminal, and the first measurement signal is used to determine a first measurement result, wherein the first measurement signal comprises channel information from the network device to the terminal through the transmitting receiving point, and the first measurement result is used to determine the serving transmitting receiving point, and the coding matrix coefficient for the serving transmitting receiving point and/or the beamforming coefficient for the network device.

8. The beamforming method according to claim 7, further comprising:

transmitting configuration information to the terminal or the transmitting receiving point, wherein the configuration information comprises first configuration information transmitted to the terminal, or second configuration information transmitted to the transmitting receiving point,
wherein the first configuration information comprises at least one of: information for indicating the first measurement signal, information for indicating a time point at which the terminal receives the first measurement signal, information for indicating the second measurement signal, or information for indicating a time point at which the terminal receives the second measurement signal,
the second configuration information comprises at least one of: information for indicating the coding matrix for the transmitting receiving point, or information for indicating a time point at which the transmitting receiving point transmits the second measurement signal, and
the second measurement signal is a measurement signal transmitted from the transmitting receiving point to the terminal.

9. The beamforming method according to claim 6, wherein the coding matrix corresponding to the serving transmitting receiving point and/or the beamforming corresponding to the network device are determined based on the following formula:

$$F_i = \xi_i F_{i,0}$$

$$\mathrm{B} = \sum_{i=1}^{N} \lambda_i B_i$$

wherein $F_i$ is a coding matrix corresponding to an $i$-th serving transmitting receiving point, $\xi_i$ is the coding matrix coefficient corresponding to the $i$-th serving transmitting receiving point, $F_{i,0}$ is a beam used by the $i$-th serving transmitting receiving point during the measurement process, B is the beamforming corresponding to the network device, N is the number of the serving transmitting receiving point determined by the terminal, $\lambda_i$ is the beamforming coefficient for the network device corresponding to the $i$-th serving transmitting receiving point, $B_i$ is the beam for the network device corresponding to the $i$-th serving transmitting receiving point, and $i$ and N are integers greater than or equal to 1.

10. A beamforming method performed by a transmitting receiving point, comprising:

transmitting a second measurement signal to a terminal,
wherein the second measurement signal is used to determine a serving transmitting receiving point of the terminal, and a coding matrix coefficient corresponding to the serving transmitting receiving point.

11. The beamforming method according to claim 10, further comprising:

receiving second configuration information transmitted from a network device; and
determining a coding matrix and/or a time point at which the second measurement signal is transmitted to the terminal based on the second configuration information.

12. The beamforming method according to claim 10, wherein transmitting the second measurement signal to the terminal comprises:

receiving a first measurement signal transmitted from a network device; and
switching a coding matrix, forwarding the first measurement signal to the terminal, and transmitting the second measurement signal to the terminal, based on a predefined rule or an instruction from the network device.

13. The beamforming method according to claim 10, wherein transmitting the second measurement signal to the terminal comprises:
transmitting the second measurement signal to the terminal from a control node of the transmitting receiving point.

14. A terminal comprising a memory, a transceiver, and a processor, wherein
the memory is configured to store a computer program, the transceiver is configured to transmit and receive data under control of the processor, and the processor is configured to read the computer program from the memory and perform operations of:

measuring a first measurement signal and a second measurement signal to determine a measurement result;
determining a serving transmitting receiving point, and a coding matrix coefficient for the serving transmitting receiving point and/or a beamforming coefficient for a network device based on the measurement result; and
transmitting the coding matrix coefficient for the serving transmitting receiving point and/or the beamforming coefficient for the network device to the network device,
wherein the first measurement signal comprises a measurement signal transmitted from the network device through a transmitting receiving point, and the second measurement signal is a measurement signal transmitted from the transmitting receiving point.

15. The terminal according to claim 14, wherein determining the measurement result comprises:

measuring the first measurement signal to determine a first measurement result, wherein the first measurement result comprises channel information from the network device to the terminal through the transmitting receiving point; and
measuring the second measurement signal to determine a second measurement result, wherein the second measurement result comprises channel information from the transmitting receiving point to the terminal.

16. The terminal according to claim 14, wherein determining the serving transmitting receiving point, and the coding matrix coefficient for the serving transmitting receiving point and/or beamforming coefficient for the network device based on the measurement result comprises:
determining the serving transmitting receiving point, and the coding matrix coefficient for the serving transmitting receiving point and/or the beamforming coefficient for the network device, based on a predefined rule or an instruction from the network device and the measurement result.

17. The terminal according to claim 16, wherein the coding matrix coefficient for the serving transmitting receiving point and/or the beamforming coefficient for the network device are determined based on the following formula:

$$\xi_i = tr(g_i^H g_i)/tr(g_n^H g_n)$$

$$\lambda_i = tr(h_i^H h_i)/tr(h_n^H h_n)$$

wherein $\xi_i$ is the coding matrix coefficient for an $i$-th serving transmitting receiving point, $\lambda_i$ is the beamforming coefficient for the network device corresponding to the $i$-th serving transmitting receiving point, $g_i$ is channel information from the $i$-th serving transmitting receiving point to the terminal, $h_i$ is channel information from the network device to the terminal through the $i$-th serving transmitting receiving point, and $(h_n, g_n)$ is channel information corresponding to a $n$-th serving transmitting receiving point, wherein the $n$-th serving transmitting receiving point is a transmitting receiving point with an optimal channel quality among serving transmitting receiving points determined by the terminal, and $i$ and $n$ are integers greater than or equal to 1.

18. The terminal according to claim 14, wherein the processor is configured to read the computer program from the memory and further perform operations of:

receiving first configuration information transmitted from the network device, wherein the first configuration information comprises at least one of: information for indicating the first measurement signal, information for indicating a time point at which the terminal receives the first measurement signal, information for indicating the second measurement signal, or information for indicating a time point at which the terminal receives the second measurement signal; and
receiving the first measurement signal and/or the second measurement signal, based on the first configuration information.

19. A network device, comprising a memory, a transceiver, and a processor, wherein:
the memory is configured to store a computer program, the transceiver is configured to transmit and receive data under control of the processor, and the processor is configured to read the computer program from the memory and perform operations of:

receiving a coding matrix coefficient for a serving transmitting receiving point and/or a beamforming coefficient for the network device transmitted from a terminal; and
determining a coding matrix corresponding to the serving transmitting receiving point of the terminal and/or the beamforming corresponding to the network device, based on the coding matrix coefficient and/or the beamforming coefficient.

20. The network device according to claim 19, wherein the processor is configured to read the computer program from the memory and further perform an operation of:

transmitting a first measurement signal to the terminal or a transmitting receiving point,
wherein the transmitting receiving point is configured to forward the first measurement signal to the terminal, and the first measurement signal is used to determine a first measurement result, wherein the first measurement signal comprises channel information from the network device to the terminal through the transmitting receiving point, and the first measurement result is used to determine the serving transmitting receiving point, and the coding matrix coefficient for the serving transmitting receiving point and/or the beamforming coefficient for the network device.

21. The network device according to claim 20, wherein the processor is configured to read the computer program from the memory and further perform an operation of:

transmitting configuration information to the terminal or the transmitting receiving point, wherein the configuration information comprises first configuration information transmitted to the terminal, or second configuration information transmitted to the transmitting receiving point,

wherein the first configuration information comprises at least one of: information for indicating the first measurement signal, information for indicating a time point at which the terminal receives the first measurement signal, information for indicating the second measurement signal, or information for indicating a time point at which the terminal receives the second measurement signal,

the second configuration information comprises at least one of: information for indicating the coding matrix for the transmitting receiving point, or information for indicating a time point at which the transmitting receiving point transmits the second measurement signal, and

the second measurement signal is a measurement signal transmitted from the transmitting receiving point to the terminal.

22. The network device according to claim 19, wherein the coding matrix corresponding to the serving transmitting receiving point and/or the beamforming corresponding to the network device are determined based on the following formula:

$$F_i = \xi_i F_{i,0}$$

$$B = \sum_{i=1}^{N} \lambda_i B_i$$

wherein $F_i$ is a coding matrix corresponding to an $i$-th serving transmitting receiving point, $\xi_i$ is the coding matrix coefficient corresponding to the $i$-th serving transmitting receiving point, $F_{i,0}$ is a beam used by the $i$-th serving transmitting receiving point during the measurement process, B is the beamforming corresponding to the network device, N is the number of the serving transmitting receiving point determined by the terminal, $\lambda_i$ is the beamforming coefficient for the network device corresponding to the $i$-th serving transmitting receiving point, $B_i$ is the beam for the network device corresponding to the $i$-th serving transmitting receiving point, and $i$ and N are integers greater than or equal to 1.

23. A transmitting receiving point, comprising a memory, a transceiver, and a processor, wherein the memory is configured to store a computer program, the transceiver is configured to transmit and receive data under control of the processor, and the processor is configured to read the computer program from the memory and perform an operation of:

transmitting a second measurement signal to a terminal,
wherein the second measurement signal is used to determine a serving transmitting receiving point of the terminal, and a coding matrix coefficient corresponding to the serving transmitting receiving point.

24. The transmitting receiving point according to claim 23, wherein the processor is configured to read the computer program from the memory and further perform operations of:

receiving second configuration information transmitted from a network device; and
determining a coding matrix and/or a time point at which the second measurement signal is transmitted to the terminal based on the second configuration information.

25. The transmitting receiving point according to claim 23, wherein transmitting the second measurement signal to the terminal comprises:

receiving a first measurement signal transmitted from a network device; and
switching a coding matrix, forwarding the first measurement signal to the terminal, and transmitting the second measurement signal to the terminal, based on a predefined rule or an instruction from the network device.

26. The transmitting receiving point according to claim 23, wherein transmitting the second measurement signal to the terminal comprises:
transmitting the second measurement signal to the terminal from a control node of the transmitting receiving point.

27. A beamforming apparatus comprising:

a measurement unit, configured to measure a first measurement signal and a second measurement signal to determine a measurement result;

a determination unit, configured to determine a serving transmitting receiving point, and a coding matrix coefficient for the serving transmitting receiving point and/or a beamforming coefficient for a network device based on the measurement result; and

a transmitting unit, configured to transmit the coding matrix coefficient for the serving transmitting receiving point and/or the beamforming coefficient for the network device to the network device,

wherein the first measurement signal comprises a measurement signal transmitted from the network device through a transmitting receiving point, and the second measurement signal is a measurement signal transmitted from the transmitting receiving point.

28. The beamforming apparatus according to claim 27, wherein the measurement unit comprises:

a first measurement module, configured to measure the first measurement signal to determine a first measurement result, wherein the first measurement result comprises channel information from the network device to the terminal through the transmitting receiving point; and

a second measurement module, configured to measure the second measurement signal to determine a second measurement result, wherein the second measurement result comprises channel information from the transmitting receiving point to the terminal.

29. The beamforming apparatus according to claim 27, wherein the determination unit is configured to:
determine the serving transmitting receiving point, and the coding matrix coefficient for the serving transmitting receiving point and/or the beamforming coefficient for the network device, based on a predefined rule or an instruction from the network device and the measurement result.

30. The beamforming apparatus according to claim 29, wherein the coding matrix coefficient for the serving transmitting receiving point and/or the beamforming coefficient for the network device are determined based on the following formula:

$$\xi_i = \mathrm{tr}\big(g_i^H g_i\big)/\mathrm{tr}(g_n^H g_n)$$

$$\lambda_i = \mathrm{tr}\big(h_i^H h_i\big)/\mathrm{tr}(h_n^H h_n)$$

wherein $\xi_i$ is the coding matrix coefficient for an *i*-th serving transmitting receiving point, $\lambda_i$ is the beamforming coefficient for the network device corresponding to the *i*-th serving transmitting receiving point, $g_i$ is channel information from the *i*-th serving transmitting receiving point to the terminal, $h_i$ is channel information from the network device to the terminal through the *i*-th serving transmitting receiving point, and $(h_n, g_n)$ is channel information corresponding to a *n*-th serving transmitting receiving point, wherein the *n*-th serving transmitting receiving point is a transmitting receiving point with an optimal channel quality among the serving transmitting receiving points determined by the terminal, and *i* and *n* are integers greater than or equal to 1.

31. The beamforming apparatus according to claim 27, further comprising:

a first receiving unit, configured to receive first configuration information transmitted from the network device, wherein the first configuration information comprises at least one of: information for indicating the first measurement signal, information for indicating a time point at which the terminal receives the first measurement signal, information for indicating the second measurement signal, or information for indicating a time point at which the terminal receives the second measurement signal; and

a second receiving unit, configured to receive the first measurement signal and/or the second measurement signal, based on the first configuration information.

32. A beamforming apparatus comprising:

a receiving unit, configured to receive a coding matrix coefficient for a serving transmitting receiving point and/or a beamforming coefficient for a network device transmitted from a terminal; and

a determination unit, configured to determine a coding matrix corresponding to the serving transmitting receiving point of the terminal and/or beamforming corresponding to the network device, based on the coding matrix coefficient and/or the beamforming coefficient.

33. The beamforming apparatus according to claim 32, further comprising:

a first transmitting unit, configured to transmit a first measurement signal to the terminal or a transmitting receiving point;

wherein the transmitting receiving point is configured to forward the first measurement signal to the terminal, and the first measurement signal is used to determine a first measurement result, wherein the first measurement signal comprises channel information from the network device to the terminal through the transmitting receiving point, and the first measurement result is used to determine the serving transmitting receiving point, and the coding matrix coefficient for the serving transmitting receiving point and/or the beamforming coefficient for the network device.

34. The beamforming apparatus according to claim 33, further comprising:

a second transmitting unit, configured to transmit configuration information to the terminal or the transmitting receiving point, wherein the configuration information comprises first configuration information transmitted to the terminal, or second configuration information transmitted to the transmitting receiving point,

wherein the first configuration information comprises at least one of: information for indicating the first measurement signal, information for indicating a time point at which the terminal receives the first measurement signal, information for indicating the second measurement signal, or information for indicating a time point at which the terminal receives the second measurement signal,

the second configuration information comprises at least one of: information for indicating the coding matrix for the transmitting receiving point, or information for indicating a time point at which the transmitting receiving point transmits the second measurement signal, and

the second measurement signal is a measurement signal transmitted from the transmitting receiving point to the terminal.

35. The beamforming apparatus according to claim 32, wherein the coding matrix corresponding to the serving transmitting receiving point and/or the beamforming corresponding to the network device are determined based on the following formula:

$$F_i = \xi_i F_{i,0}$$

$$B = \sum_{i=1}^{N} \lambda_i B_i$$

wherein $F_i$ is the coding matrix corresponding to an $i$-th serving transmitting receiving point, $\xi_i$ is the coding matrix coefficient corresponding to the $i$-th serving transmitting receiving point, $F_{i,0}$ is a beam used by the $i$-th serving transmitting receiving point during the measurement process, B is the beamforming corresponding to the network device, N is the number of the serving transmitting receiving point determined by the terminal, $\lambda_i$ is the beamforming coefficient for the network device corresponding to the $i$-th serving transmitting receiving point, $B_i$ is the beam for the network device corresponding to the $i$-th serving transmitting receiving point, and i and N are integers greater than or equal to 1.

36. A beamforming apparatus, comprising:

a transmitting unit, configured to transmit a second measurement signal to a terminal;

wherein the second measurement signal is used to determine a serving transmitting receiving points of the terminal, and a coding matrix coefficient corresponding to the serving transmitting receiving point.

37. The beamforming apparatus according to claim 36, further comprising:

a first receiving unit, configured to receive second configuration information transmitted from a network device;

and
a determination unit, configured to determine a coding matrix and/or a time point at which the second measurement signal is transmitted to the terminal based on the second configuration information.

38. The beamforming apparatus according to claim 36, wherein the transmitting unit comprises:

a receiving module, configured to receive a first measurement signal transmitted from a network device; and
a first transmitting module, configured to switch a coding matrix, forward the first measurement signal to the terminal, and transmit the second measurement signal to the terminal, based on a predefined rule or an instruction from the network device.

39. The beamforming apparatus according to claim 36, wherein the transmitting unit comprises:
a second transmitting module, configured to transmit the second measurement signal to the terminal from a control node of the transmitting receiving point.

40. A non-transitory readable storage medium storing a computer program which is configured to cause a computer to perform the method according to any of claims 1 to 5.

41. A non-transitory readable storage medium storing a computer program which is configured to cause a computer to perform the method according to any of claims 6 to 9.

42. A non-transitory readable storage medium storing a computer program which is configured to cause a computer to perform the method according to any of claims 10 to 13.

FIG. 1

| Measure a first measurement signal and a second measurement signal to determine a measurement result | 201 |

| Determine a serving transmitting receiving point, and a coding matrix coefficient for the serving transmitting receiving point and/or a beamforming coefficient for a network device based on the measurement result | 202 |

| Transmit the coding matrix coefficient for the serving transmitting receiving point and/or the beamforming coefficient for the network device to the network device | 203 |

FIG. 2

RIS

$H_1$

$H_2$

UE

Base station

FIG. 3

Receive a coding matrix coefficient for a serving transmitting receiving point and/or a beamforming coefficient for the network device transmitted from a terminal 401

Determine a coding matrix corresponding to the serving transmitting receiving point of the terminal and/or beamforming corresponding to the network device, based on the coding matrix coefficient and/or the beamforming coefficient 402

FIG. 4

Transmit a second measurement signal to a terminal 501

FIG. 5

FIG. 6

FIG. 7

FIG. 8

Measurement unit — 901

Determination unit — 902

Transmitting unit — 903

FIG. 9

Receiving unit — 1001

Determination unit — 1002

FIG. 10

Transmitting unit — 1101

FIG. 11

## INTERNATIONAL SEARCH REPORT

| | International application No. |
| --- | --- |
| | **PCT/CN2024/108670** |

| A. | CLASSIFICATION OF SUBJECT MATTER |
| --- | --- |

H04B7/0426(2017.01)i

According to International Patent Classification (IPC) or to both national classification and IPC

| B. | FIELDS SEARCHED |
| --- | --- |

Minimum documentation searched (classification system followed by classification symbols)

IPC:H04B,H04W

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE, 3GPP: 波束, 赋形, 成形, 多点, MTRP, 智能反射面, 智能表面, 智能中继, RIS, IRS, 参考信号, 测量信号, 编码矩阵, beamform+, multi+ trp, intelligent, surface, reference signal?, measur+, matrix

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023055704 A1 (INTERDIGITAL PATENT HOLDINGS, INC.) 06 April 2023 (2023-04-06) <br> description, paragraphs [0110]-[0122] | 1-42 |
| A | WO 2023027321 A1 (LG ELECTRONICS, INC.) 02 March 2023 (2023-03-02) <br> entire document | 1-42 |
| A | CN 114257475 A (SONY CORP.) 29 March 2022 (2022-03-29) <br> entire document | 1-42 |
| A | CN 116390242 A (APPLE INC.) 04 July 2023 (2023-07-04) <br> entire document | 1-42 |
| A | WO 2022221976 A1 (QUALCOMM INC.) 27 October 2022 (2022-10-27) <br> entire document | 1-42 |
| A | WO 2022261576 A1 (QUALCOMM INC.) 15 December 2022 (2022-12-15) <br> entire document | 1-42 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 October 2024** | **21 October 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/108670** |

**C.    DOCUMENTS CONSIDERED TO BE RELEVANT**

| Category* | Citation of document, with indication, where appropriate, of the relevant passages | Relevant to claim No. |
| --- | --- | --- |
| A | ZTE et al. "Support of Reconfigurable Intelligent Surface for 5G Advanced" *3GPP TSG RAN Meeting #93e, RP-212385*, 17 September 2021 (2021-09-17), entire document | 1-42 |

Form PCT/ISA/210 (second sheet) (July 2022)

**INTERNATIONAL SEARCH REPORT**
**Information on patent family members**

International application No.

**PCT/CN2024/108670**

| Patent document cited in search report | | | Publication date (day/month/year) | Patent family member(s) | | | Publication date (day/month/year) |
|---|---|---|---|---|---|---|---|
| WO | 2023055704 | A1 | 06 April 2023 | EP | 4409847 | A1 | 07 August 2024 |
| | | | | CN | 118285079 | A | 02 July 2024 |
| WO | 2023027321 | A1 | 02 March 2023 | EP | 4395195 | A1 | 03 July 2024 |
| | | | | KR | 20240047340 | A | 12 April 2024 |
| CN | 114257475 | A | 29 March 2022 | WO | 2022057918 | A1 | 24 March 2022 |
| | | | | EP | 4207491 | A1 | 05 July 2023 |
| | | | | CN | 116711158 | A | 05 September 2023 |
| | | | | US | 2023318177 | A1 | 05 October 2023 |
| CN | 116390242 | A | 04 July 2023 | US | 2023217381 | A1 | 06 July 2023 |
| WO | 2022221976 | A1 | 27 October 2022 | | None | | |
| WO | 2022261576 | A1 | 15 December 2022 | BR | 112023025063 | A2 | 27 February 2024 |
| | | | | EP | 4352885 | A1 | 17 April 2024 |
| | | | | TW | 202249514 | A | 16 December 2022 |
| | | | | US | 2024244564 | A1 | 18 July 2024 |
| | | | | KR | 20240019768 | A | 14 February 2024 |
| | | | | JP | 2024522564 | A | 21 June 2024 |
| | | | | IN | 202347071938 | A | 01 December 2023 |
| | | | | CN | 117441297 | A | 23 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311078237